(19) Europäisches Patentamt
European Patent Office
Office européen des brevets

(11) **EP 4 561 127 A1**

(12) **EUROPEAN PATENT APPLICATION**
published in accordance with Art. 153(4) EPC

(43) Date of publication:
**28.05.2025 Bulletin 2025/22**

(21) Application number: **23849027.0**

(22) Date of filing: **31.05.2023**

(51) International Patent Classification (IPC):
*H04W 8/24* (2009.01)

(52) Cooperative Patent Classification (CPC):
**H04W 8/24; H04W 24/02**

(86) International application number:
**PCT/CN2023/097375**

(87) International publication number:
**WO 2024/027317 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.08.2022 CN 202210926439**

(71) Applicant: **Huawei Technologies Co., Ltd.**
**Shenzhen, Guangdong 518129 (CN)**

(72) Inventors:
• HU, Dan
  **Shenzhen, Guangdong 518129 (CN)**
• LIU, Ye
  **Shenzhen, Guangdong 518129 (CN)**
• WANG, Jin
  **Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD AND COMMUNICATION APPARATUS**

(57) Embodiments of this application provide a communication method and a communication apparatus. The method includes: A terminal determines a capability of mitigating maximum sensitivity degradation MSD for a first band combination, where the first band combination includes a first band and a second band, and a band number of the first band is different from a band number of the second band; and the terminal sends first information to a network, where the first information indicates the capability of mitigating the MSD. In embodiments of this application, the terminal may send the first information to the network, where the first information may indicate a capability of the terminal to mitigate the MSD for the first band combination, so that the network can learn of the capability of the terminal to mitigate the MSD, and determine, based on the first information, whether the MSD needs to be further mitigated. The MSD is effectively mitigated by the terminal or the network, so that receiving performance of the terminal can be improved.

200

```
┌──────────┐                          ┌──────────┐
│ Terminal │                          │ Network  │
└──────────┘                          └──────────┘
     │                                      │
┌─────────────────────┐                     │
│ S210: Determine a   │                     │
│ capability of       │                     │
│ mitigating maximum  │                     │
│ sensitivity         │                     │
│ degradation MSD     │                     │
│ for a first band    │                     │
│ combination         │                     │
└─────────────────────┘                     │
     │                                      │
     │────── S220: First information ──────▶│
     │                                      │
```

FIG. 2

EP 4 561 127 A1

**Description**

This application claims priority to Chinese Patent Application No. 202210926439.1, filed with the China National Intellectual Property Administration on August 3, 2022 and entitled "COMMUNICATION METHOD AND COMMUNICATION APPARATUS", which is incorporated herein by reference in its entirety.

**TECHNICAL FIELD**

Embodiments of this application relate to the communication field, and more specifically, to a communication method and a communication apparatus.

**BACKGROUND**

Receiver sensitivity is used to describe a minimum signal received power of a downlink wanted signal received by a terminal. When signal energy of the terminal is less than nominal receiver sensitivity, the terminal does not receive any data. In other words, the receiver sensitivity is a minimum threshold for the terminal to receive a signal. In wireless transmission, the receiver sensitivity is similar to people's hearing during communication. Improving receiver sensitivity of signals enables wireless products to better capture weak signals. In this way, as a transmission distance increases, although a received signal becomes weaker, a high-sensitivity wireless product can still receive data and maintain a stable connection, so that the transmission distance can be greatly extended.

However, in an actual signal transmission process, reception of the terminal is interfered due to various reasons (for example, signals on two uplink bands fall into a downlink receive band), resulting in deterioration of receiver sensitivity of the terminal, that is, maximum sensitivity degradation (maximum sensitivity degradation, MSD). The MSD affects downlink communication of the terminal, in other words, affects receiving performance of the terminal. Therefore, the terminal and/or a network need/needs to take a corresponding measure to mitigate the MSD.

Generally, both the network and the terminal can mitigate the MSD, but information exchange cannot be performed between the terminal and the network. In this way, the network cannot learn which MSD needs to be mitigated, and cannot determine whether a measure needs to be taken to mitigate the MSD. Therefore, the MSD cannot be effectively mitigated, affecting the receiving performance of the terminal.

**SUMMARY**

Embodiments of this application provide a communication method and a communication apparatus. A terminal and a network may exchange information through first information, so that MSD can be effectively mitigated, thereby improving receiving performance of the terminal device.

According to a first aspect, a communication method is provided, and is applied to a terminal or a module in the terminal. The method includes:

determining a capability of mitigating maximum sensitivity degradation MSD for a first band combination, where the first band combination includes a first band and a second band, and a band number of the first band is different from a band number of the second band; and
sending first information, where the first information indicates the capability of mitigating the MSD for the first band combination.

In this embodiment of this application, the terminal may send the first information to a network. The first information may indicate a capability of the terminal to mitigate the MSD for the first band combination, so that the network can learn of the capability of the terminal to mitigate the MSD, and determine, based on the first information, whether the MSD needs to be further mitigated, to effectively mitigate the MSD, thereby improving receiving performance of the terminal.

In a possible implementation, before the terminal determines the capability of mitigating the maximum sensitivity degradation MSD for the first band combination, the method further includes: obtaining, by the terminal, a first carrier and a second carrier, where the first band corresponding to the first carrier and the second band corresponding to the second carrier form the first band combination, and a relationship of the first band combination is carrier aggregation, or a relationship of the first band combination is dual connectivity. In other words, the network configures carrier aggregation CA/dual connectivity DC for the terminal, and this dual connectivity mode may include EN-DC, NE-DC, or NR-DC.

With reference to the first aspect, in some implementations of the first aspect, the first information includes MSD mitigation capability information. The MSD mitigation capability information indicates that the terminal can mitigate the MSD, or the MSD mitigation capability information indicates that the terminal cannot mitigate the MSD.

In this embodiment of this application, the first information sent by the terminal to the network may include the MSD mitigation capability information, and the MSD mitigation capability information may indicate that the terminal can mitigate the MSD or indicate that the terminal cannot mitigate the MSD, so that after receiving the first information, the network determines whether the terminal can mitigate the MSD. If the terminal cannot mitigate the MSD, the network may take a corresponding measure to mitigate the MSD, to avoid that the MSD cannot be mitigated and the receiving performance of the terminal is affected.

With reference to the first aspect, in some implementations of the first aspect, if a first MSD value is less than or equal to a first threshold, the MSD mitigation capability information indicates that the terminal can mitigate the MSD; or if a first MSD value is greater than a first threshold, the MSD mitigation capability information indicates that the terminal cannot mitigate the MSD. The first MSD value is an MSD value of the terminal for the first band combination. In other words, the MSD mitigation capability information is determined based on the first MSD value. The first MSD value may be understood as an MSD value actually generated by the terminal for a given band combination (for example, the first band combination). It should be understood that the first MSD value corresponds to the terminal, and first MSD values of different terminals may be different.

Optionally, the first threshold is predefined, the first threshold is configured by using a higher layer parameter, or the first threshold is dynamically indicated by using DCI or a MAC CE. This is not limited in this application. For example, a value of the first threshold may be 5 dB, 10 dB, or the like.

In this embodiment of this application, if the MSD value of the terminal for the first band combination is less than or equal to the first threshold, it indicates that the first MSD value of the terminal (that is, an MSD value reduced by the terminal) meets a specific requirement. In this case, the MSD mitigation capability information may be reported to indicate that the terminal can mitigate the MSD, and the network does not need to further mitigate the MSD. If the first MSD value of the terminal is greater than the first threshold, it indicates that the terminal cannot effectively mitigate the MSD value, in other words, a mitigated MSD value cannot meet a requirement. In this case, the MSD mitigation capability information may be reported to indicate that the terminal cannot mitigate the MSD, and the MSD of the terminal needs to be mitigated through network scheduling restriction, to improve the receiving performance of the terminal.

With reference to the first aspect, in some implementations of the first aspect, if a first MSD value is less than or equal to a first threshold and a second MSD value is greater than or equal to a second threshold, the MSD mitigation capability information indicates that the terminal can mitigate the MSD; or if a first MSD value is greater than a first threshold, the MSD mitigation capability information indicates that the terminal cannot mitigate the MSD. The first MSD value is an MSD value of the terminal for the first band combination, the second MSD value is an MSD value predefined for the first band combination, and the first MSD value is less than the second MSD value. In other words, the MSD mitigation capability information is determined based on the first MSD value and the second MSD value. The second MSD value may be understood as an MSD value obtained through an assumption and a definition of a band combination in a conventional RAN4. At a specific power level, for a given band combination (for example, the first band combination), the second MSD value is fixed, and is predefined in a protocol.

Optionally, the second threshold is predefined, the second threshold is configured by using a higher layer parameter, or the second threshold is dynamically indicated by using DCI or a MAC CE. This is not limited in this application. For example, a value of the second threshold may be 5 dB, 10 dB, or the like.

In this embodiment of this application, the terminal may determine, based on the first MSD value and the second MSD value, whether the terminal is capable of mitigating the MSD. If the first MSD value is less than or equal to the first threshold and the second MSD value is greater than or equal to the second threshold, it indicates that the terminal can mitigate the MSD, the network does not need to further mitigate the MSD, and the terminal may send the MSD mitigation capability information to the network to indicate that the terminal can mitigate the MSD. If the first MSD value is greater than the first threshold, it indicates that the terminal cannot effectively mitigate the MSD. Therefore, the terminal may send the MSD mitigation capability information to the network to indicate that the terminal cannot mitigate the MSD.

With reference to the first aspect, in some implementations of the first aspect, the first information includes MSD type information, the MSD type information indicates a type of the MSD for the first band combination, and the MSD type information includes at least one of the following: second order inter-modulation interference, third order inter-modulation interference, fourth order inter-modulation interference, fifth order inter-modulation interference, second order harmonic interference, third order harmonic interference, fourth order harmonic interference, fifth order harmonic interference, second order harmonic mixing interference, third order harmonic mixing interference, fourth order harmonic mixing interference, fifth order harmonic mixing interference, or cross-band isolation.

In a possible implementation, the MSD type information includes all MSD types existing in the first band combination. In other words, all MSD types existing in the first band combination are reported to the network.

In a possible implementation, the MSD type information includes an MSD type corresponding to a maximum second MSD value in the first band combination, and the second MSD value is an MSD value predefined for the first band combination. In other words, an MSD type with the most severe MSD problem is reported to the network.

In a possible implementation, the MSD type information includes an MSD type that satisfies a first condition and that is in the first band combination, the first condition is that the first MSD value is greater than or equal to a third threshold, and the first MSD value is an MSD value of the terminal for the first band combination. In other words, the terminal may send, to the network based on the first MSD value of the terminal, the MSD type corresponding to the first MSD value greater than or equal to the third threshold. In this case, it indicates that the terminal cannot mitigate the MSD either. Therefore, an MSD type that cannot be mitigated needs to be sent to the network, so that the network takes an appropriate measure based on the MSD type information in the first information.

Optionally, the third threshold is predefined, the third threshold is configured by using a higher layer parameter, or the third threshold is dynamically indicated by using DCI or a MAC CE. This is not limited in this application. For example, a value of the third threshold may be 5 dB, 10 dB, or the like.

In a possible implementation, the MSD type information includes an MSD type in which a third MSD value is not zero in the first band combination. The third MSD value is a difference between the first MSD value and the second MSD value, the first MSD value is an MSD value of the terminal device for the first band combination, the second MSD value is an MSD value predefined for the first band combination, and the first MSD value is less than the second MSD value. In other words, the MSD type information reported by the terminal device is a type of mitigated MSD.

Optionally, the terminal reports an MSD type that satisfies a second condition. The second condition is that the first MSD value is less than or equal to the first threshold and the second MSD value is greater than the second threshold.

In a possible implementation, the first information includes the MSD mitigation capability information and the MSD type information. In other words, when reporting the MSD mitigation capability information, the terminal may report corresponding MSD type information, to be specific, which types of MSD can be mitigated by the terminal, or which types of MSD cannot be mitigated by the terminal. In this case, the network may learn, by receiving the first information, which types of MSD need to be mitigated and/or which types of MSD do not need to be mitigated.

With reference to the first aspect, in some implementations of the first aspect, the first band combination further includes a third band. A band number of the third band is different from the band number of the first band, and the band number of the third band is different from the band number of the second band. The first information includes band information, the band information indicates the third band, and the third band is a band that is affected by the MSD and that is in the first band combination.

In this case, the terminal may directly report the band affected by the MSD to the network, so that after receiving the first information, the network may determine information about the third band affected by the MSD (for example, the third band number), to mitigate an MSD problem pertinently.

In a possible implementation, the first information includes at least one of the MSD mitigation capability information, the MSD type information, or the band information, so that after receiving the first information, the network may take an appropriate measure based on the first information to mitigate the MSD.

With reference to the first aspect, in some implementations of the first aspect, the first information includes first range information. The first range information includes a range to which the first MSD value belongs, and the first MSD value is an MSD value of the terminal for the first band combination.

Optionally, the network side and the terminal side may predefine or pre-configure an MSD mitigation range mapping table (that is, a range mapping table corresponding to the first MSD value). The mapping table may include a value (reported value) reported by the terminal and a first MSD value range corresponding to the reported value. The reported value may be a bit value, the first MSD value range may be [0, N1], [N1, N2], [N2, N3), or the like, and the bit value corresponds to the first MSD value range. For example, 0 bits reported by the terminal indicate that the first MSD value is within the range of [0, N1), and 1 bit reported by the terminal indicates that the first MSD value is within the range of [N1, N2). Therefore, after receiving the reported bit value, the network may determine the range of the first MSD value based on the MSD mitigation range mapping table, so that after receiving the first information, the network may take an appropriate measure to mitigate the MSD.

In a possible implementation, the first information includes at least one of the MSD mitigation capability information, the MSD type information, the band information, or the first range information, so that after receiving the first information, the network may take an appropriate measure based on the first information to mitigate the MSD.

Optionally, the first information may include the first range information and the MSD type information. In other words, when reporting the first range information, the terminal may further report the MSD type information, so that after receiving the first information, the network may learn of the range to which the first MSD value belongs and a type of the first MSD value, and the network takes a corresponding measure more pertinently based on the first information to mitigate the MSD.

With reference to the first aspect, in some implementations of the first aspect, the first information includes second range information. The second range information includes a range to which the third MSD value belongs, the third MSD value is a difference between the first MSD value and the second MSD value, the first MSD value is an MSD value of the terminal for the first band combination, the second MSD value is an MSD value predefined for the first band combination, and the first MSD value is less than the second MSD value.

Optionally, the network side and the terminal side may predefine or pre-configure a range mapping table of mitigated MSD (that is, a range mapping table corresponding to the third MSD value). The mapping table may include a value (reported value) reported by the terminal and a third MSD value range corresponding to the reported value. The reported value may be a bit value, the third MSD value range may be [0, N1), [N1, N2), [N2, N3), or the like, and the bit value corresponds to the third MSD value range. For example, 0 bits reported by the terminal indicate that the third MSD value is within the range of [0, N1), and 1 bit reported by the terminal indicates that the third MSD value is within the range of [N1, N2). Therefore, after receiving the reported bit value, the network may determine the range of the third MSD value based on the MSD mitigation range mapping table, so that after receiving the first information, the network may take an appropriate measure to mitigate the MSD.

In a possible implementation, the first information includes at least one of the MSD mitigation capability information, the MSD type information, the band information, or the second range information, so that after receiving the first information, the network may take an appropriate measure based on the first information to mitigate the MSD.

Optionally, the first information may include the second range information and the MSD type information. In other words, when reporting the second range information, the terminal may further report the MSD type information, so that after receiving the first information, the network may learn of the range to which the third MSD value belongs and a type of the third MSD value, and the network takes a corresponding measure more pertinently based on the first information to mitigate the MSD.

With reference to the first aspect, in some implementations of the first aspect, the first information includes the first MSD value, or the first information includes the third MSD value. The third MSD value is a difference between the first MSD value and the second MSD value, the first MSD value is an MSD value of the terminal for the first band combination, the second MSD value is an MSD value predefined for the first band combination, and the first MSD value is less than the second MSD value.

In a possible implementation, the first information includes at least one of the MSD mitigation capability information, the MSD type information, the band information, the first MSD value, or the third MSD value, so that after receiving the first information, the network may take an appropriate measure based on the first information to mitigate the MSD.

With reference to the first aspect, in some implementations of the first aspect, the first information includes first behavior information and/or second behavior information. The first behavior information indicates that the network sends uplink transmission on a single carrier or a single band. The second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

Optionally, the fifth threshold is predefined, the fifth threshold is configured by using a higher layer parameter, or the fifth threshold is dynamically indicated by using DCI or a MAC CE. This is not limited in this application.

In a possible implementation, the first information includes at least one of the MSD mitigation capability information, the MSD type information, the band information, the first range information, the first behavior information, or the second behavior information, so that after receiving the first information, the network may take an appropriate measure based on the first information to mitigate the MSD.

In a possible implementation, the first information includes at least one of the MSD mitigation capability information, the MSD type information, the band information, the second range information, the first behavior information, or the second behavior information, so that after receiving the first information, the network may take an appropriate measure based on the first information to mitigate the MSD.

In a possible implementation, the first information includes at least one of the MSD mitigation capability information, the MSD type information, the band information, the first MSD value, the third MSD value, the first behavior information, or the second behavior information, so that after receiving the first information, the network may take an appropriate measure based on the first information to mitigate the MSD.

With reference to the first aspect, in some implementations of the first aspect, the first information includes simultaneous transmission and reception capability indication information. The simultaneous transmission and reception capability indication information indicates that the first band combination supports simultaneous transmission and reception, or the simultaneous transmission and reception capability indication information indicates that the first band combination does not support simultaneous transmission and reception.

With reference to the first aspect, in some implementations of the first aspect, if the first MSD value is greater than or equal to the first threshold, the simultaneous transmission and reception capability indication information indicates that the first band combination does not support simultaneous transmission and reception; or if the first MSD value is less than the first threshold, the simultaneous transmission and reception capability indication information indicates that the first band combination supports simultaneous transmission and reception.

Alternatively, if the second MSD value is greater than or equal to a fourth threshold, the simultaneous transmission and reception capability indication information indicates that the first band combination does not support simultaneous transmission and reception; or if the second MSD value is less than a fourth threshold, the simultaneous transmission and reception capability indication information indicates that the first band combination supports simultaneous transmission and reception.

The first MSD value is an MSD value of the terminal for the first band combination, the second MSD value is an MSD value predefined for the first band combination, and the first MSD value is less than the second MSD value.

Optionally, the fourth threshold is predefined, the fourth threshold is configured by using a higher layer parameter, or the fourth threshold is dynamically indicated by using DCI or a MAC CE. This is not limited in this application. For example, a value of the fourth threshold may be 10 dB, 15 dB, 28.7 dB, or the like.

In this embodiment of this application, if the first MSD value is greater than or equal to the first threshold, it indicates that the terminal cannot effectively mitigate the MSD. Therefore, the simultaneous transmission and reception capability indication information needs to be sent to the network to indicate that the first band combination does not support simultaneous transmission and reception, to avoid that the network schedules signal receiving and sending simultaneously, and avoid further impact on the MSD. In addition, if the second MSD value is greater than or equal to the fourth threshold, it indicates that an original MSD value is large, and if the first band combination still supports simultaneous transmission and reception, the MSD may be further affected. Therefore, the terminal may also report the simultaneous transmission and reception capability indication information to indicate that the first band combination does not support simultaneous transmission and reception.

With reference to the first aspect, in some implementations of the first aspect, if the first MSD value is less than or equal to the first threshold, the simultaneous transmission and reception capability indication information indicates that the first band combination does not support simultaneous transmission and reception, and the first MSD value is an MSD value of the terminal for the first band combination.

In this embodiment of this application, if the first MSD value is less than or equal to the first threshold, the terminal may mitigate the MSD for the first band combination, and if simultaneous transmission and reception of a signal is still supported, the first MSD value of the terminal may be affected (for example, the first MSD value is increased). As a result, receiving performance of the terminal is affected. Therefore, in this case, the terminal may report the simultaneous transmission and reception capability indication information to indicate that the first band combination does not support simultaneous transmission and reception.

In a possible implementation, the first information includes at least one of the MSD mitigation capability information, the MSD type information, the band information, the first range information, the first behavior information, the second behavior information, or the simultaneous transmission and reception capability indication information, so that after receiving the first information, the network may take an appropriate measure based on the first information to mitigate the MSD.

In a possible implementation, the first information includes at least one of the MSD mitigation capability information, the MSD type information, the band information, the second range information, the first behavior information, the second behavior information, or the simultaneous transmission and reception capability indication information, so that after receiving the first information, the network may take an appropriate measure based on the first information to mitigate the MSD.

In a possible implementation, the first information includes at least one of the MSD mitigation capability information, the MSD type information, the band information, the first MSD value, the third MSD value, the first behavior information, the second behavior information, or the simultaneous transmission and reception capability indication information, so that after receiving the first information, the network may take an appropriate measure based on the first information to mitigate the MSD.

With reference to the first aspect, in some implementations of the first aspect, the first information includes scaling factor information. The scaling factor information indicates a ratio of a transmit power change value of the terminal to the third MSD value. The third MSD value is a difference between the first MSD value and a second MSD value, the first MSD value is an MSD value of the terminal for the first band combination, the second MSD value is an MSD value predefined in the first band combination, and the first MSD value is less than the second MSD value.

It may be understood that, for different band combinations and different MSD types, the ratio of the transmit power change value to the third MSD value may be different. Therefore, when reporting a given band combination (for example, the first band combination), the terminal may report scaling factor information corresponding to at least one MSD type.

In a possible implementation, the first information includes at least one of the MSD mitigation capability information, the MSD type information, the band information, the first range information, the first behavior information, the second behavior information, the simultaneous transmission and reception capability indication information, or the scaling factor information, so that after receiving the first information, the network may take an appropriate measure based on the first information to mitigate the MSD.

In a possible implementation, the first information includes at least one of the MSD mitigation capability information, the MSD type information, the band information, the second range information, the first behavior information, the second behavior information, the simultaneous transmission and reception capability indication information, or the scaling factor information, so that after receiving the first information, the network may take an appropriate measure based on the first information to mitigate the MSD.

In a possible implementation, the first information includes at least one of the MSD mitigation capability information, the MSD type information, the band information, the first MSD value, the third MSD value, the first behavior information, the second behavior information, the simultaneous transmission and reception capability indication information, or the scaling factor information, so that after receiving the first information, the network may take an appropriate measure based on the first information to mitigate the MSD.

With reference to the first aspect, in some implementations of the first aspect, the first information is determined based on a location of the terminal.

Optionally, the terminal device determines the location in a cell based on a path loss measurement value or a timing advance. If the path loss measurement value or the timing advance of the terminal device is less than or equal to a sixth threshold, the terminal device is located at a position close to the cell to which the terminal device belongs. If the path loss measurement value or the timing advance of the terminal device is greater than a sixth threshold, the terminal device is located at a position far away from the cell to which the terminal device belongs. Optionally, the terminal may further determine the location in the cell based on an RRM measurement parameter configured by the network.

Optionally, if the terminal device is located at the position close to the cell to which the terminal device belongs, the first information includes the MSD mitigation capability information. The MSD mitigation capability information indicates that the terminal device can mitigate the MSD for the first band combination, or the MSD mitigation capability information indicates that the terminal device cannot mitigate the MSD for the first band combination.

Optionally, if the first MSD value is less than or equal to the first threshold, the MSD mitigation capability information indicates that the terminal device can mitigate the MSD for the first band combination; or if the first MSD value is greater than the first threshold, the MSD mitigation capability information indicates that the terminal device cannot mitigate the MSD for the first band combination. The first MSD value is an MSD value of the terminal for the first band combination.

Optionally, if the first MSD value is less than or equal to the first threshold, and the second MSD value is greater than or equal to the second threshold, the MSD mitigation capability information indicates that the terminal device can mitigate the MSD for the first band combination; or if the first MSD value is greater than the first threshold, the mitigation capability information indicates that the terminal device cannot mitigate the MSD for the first band combination. The first MSD value is an MSD value of the terminal for the first band combination, the second MSD value is an MSD value predefined for the first band combination, and the first MSD value is less than the second MSD value.

Optionally, if the terminal device is located at the position far away from the cell to which the terminal device belongs, the first information includes the first behavior information and/or the second behavior information. The first behavior information indicates that the network sends uplink transmission on a single carrier or a single band. The second behavior information indicates that the network does not simultaneously schedule uplink and downlink transmission in the first band combination, or the second behavior information indicates that the interval between uplink and downlink transmission scheduled by the network in the first band combination is greater than or equal to the fifth threshold.

In this embodiment of this application, when determining the first information, the terminal considers impact of the location of the terminal on the MSD, so that the terminal can more efficiently determine and report the first information.

According to a second aspect, a communication method is provided, and is applied to a network or a module in the network. The method includes:

receiving first information. The first information indicates a capability of a terminal to mitigate maximum sensitivity degradation MSD for a first band combination. The first band combination includes a first band and a second band, and a band number of the first band is different from a band number of the second band.

It should be understood that the first information may be the first information according to any one of the first aspect or the possible implementations of the first aspect.

In this embodiment of this application, the network receives the first information, and determines, based on the first information, the capability of the terminal to mitigate the MSD, so that the network determines, based on the first information, whether the MSD needs to be further mitigated, thereby improving receiving performance of the terminal.

In a possible implementation, the method further includes: The network sends a first carrier and a second carrier. The first band corresponding to the first carrier and the second band corresponding to the second carrier form the first band combination. A relationship of the first band combination is carrier aggregation, or a relationship of the first band combination is dual connectivity. This dual connectivity mode may include EN-DC, NE-DC, or NR-DC.

With reference to the second aspect, in some implementations of the second aspect, the network determines, based on the first information, to schedule uplink transmission on a single carrier or a single band.

With reference to the second aspect, in some implementations of the second aspect, the network determines, based on the first information, not to simultaneously schedule uplink and downlink transmission in the first band combination.

With reference to the second aspect, in some implementations of the second aspect, the network determines, based on the first information, that an interval between uplink and downlink transmission scheduled in the first band combination is greater than or equal to a fifth threshold.

With reference to the second aspect, in some implementations of the second aspect, the network adjusts, based on the first information, a transmit power for the terminal device to send an uplink signal.

In this embodiment of this application, the network may take a corresponding measure to intervene in the terminal based on the received first information. The network may schedule the terminal to send uplink transmission on a single carrier or a single band, or not simultaneously schedule uplink and downlink transmission in the first band combination, where the interval between uplink and downlink transmission scheduled in the first band combination is greater than or equal to the fifth threshold, or adjust the transmit power for the terminal device to send the uplink signal. In this way, the MSD of the terminal is mitigated, and the receiving performance of the terminal is improved.

According to a third aspect, a communication apparatus is provided, including a processing unit and a sending unit. The processing unit is configured to determine a capability of mitigating maximum sensitivity degradation MSD for a first band combination, where the first band combination includes a first band and a second band, and a band number of the first band is different from a band number of the second band. The sending unit is configured to send first information, where the first information indicates the capability of mitigating the MSD.

It should be understood that the first information may be the first information according to any one of the first aspect or the possible implementations of the first aspect.

With reference to the third aspect, in some implementations of the third aspect, the communication apparatus further includes a receiving unit. The receiving unit is configured to obtain a first carrier and a second carrier. The first band corresponding to the first carrier and the second band corresponding to the second carrier form the first band combination. A relationship of the first band combination is carrier aggregation, or a relationship of the first band combination is dual connectivity. This dual connectivity mode may include EN-DC, NE-DC, or NR-DC.

With reference to the third aspect, in some implementations of the third aspect, the processing unit is further configured to: determine a location in a cell based on a path loss measurement value or a timing advance. If the path loss measurement value or the timing advance of the terminal device is less than or equal to a sixth threshold, the terminal device is located at a position close to the cell to which the terminal device belongs; or if the path loss measurement value or the timing advance of the terminal device is greater than a sixth threshold, the terminal device is located at a position far away from the cell to which the terminal device belongs.

Optionally, if the terminal device is located at the position close to the cell to which the terminal device belongs, the first information includes MSD mitigation capability information. The MSD mitigation capability information indicates that the terminal device can mitigate the MSD for the first band combination, or the MSD mitigation capability information indicates that the terminal device cannot mitigate the MSD for the first band combination.

Optionally, if a first MSD value is less than or equal to a first threshold, the MSD mitigation capability information indicates that the terminal device can mitigate the MSD for the first band combination; or if a first MSD value is greater than a first threshold, the MSD mitigation capability information indicates that the terminal device cannot mitigate the MSD for the first band combination. The first MSD value is an MSD value of the terminal for the first band combination.

Optionally, if a first MSD value is less than or equal to a first threshold, and a second MSD value is greater than or equal to a second threshold, the MSD mitigation capability information indicates that the terminal device can mitigate the MSD for the first band combination; or if a first MSD value is greater than a first threshold, the mitigation capability information indicates that the terminal device cannot mitigate the MSD for the first band combination. The first MSD value is an MSD value of the terminal for the first band combination, the second MSD value is an MSD value predefined for the first band combination, and the first MSD value is less than the second MSD value.

Optionally, if the terminal device is located at the position far away from the cell to which the terminal device belongs, the first information includes first behavior information and/or second behavior information. The first behavior information indicates that the network schedules uplink transmission on a single carrier or a single band. The second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

According to a fourth aspect, a communication apparatus is provided, including: a receiving unit. The receiving unit is configured to receive first information. The first information indicates a capability of a terminal to mitigate maximum sensitivity degradation MSD for a first band combination. The first band combination includes a first band and a second band, and a band number of the first band is different from a band number of the second band.

It should be understood that the first information may be the first information according to any one of the first aspect or the possible implementations of the first aspect.

With reference to the fourth aspect, in some implementations of the fourth aspect, the communication apparatus further includes a sending unit. The sending unit is configured to send a first carrier and a second carrier. The first band corresponding to the first carrier and the second band corresponding to the second carrier form the first band combination. A relationship of the first band combination is carrier aggregation, or a relationship of the first band combination is dual connectivity. This dual connectivity mode may include EN-DC, NE-DC, or NR-DC.

With reference to the fourth aspect, in some implementations of the fourth aspect, the communication apparatus further includes a processing unit. The processing unit is configured to determine, based on the first information, to schedule uplink transmission on a single carrier or a single band.

With reference to the fourth aspect, in some implementations of the fourth aspect, the processing unit is further configured to determine, based on the first information, not to simultaneously schedule uplink and downlink transmission in the first band combination.

With reference to the fourth aspect, in some implementations of the fourth aspect, the processing unit is further configured to determine, based on the first information, that an interval between uplink and downlink transmission scheduled in the first band combination is greater than or equal to a fifth threshold.

With reference to the fourth aspect, in some implementations of the fourth aspect, the processing unit is further configured to adjust, based on the first information, a transmit power for the terminal device to send an uplink signal.

According to a fifth aspect, a communication apparatus is provided, including: a processor. The processor is coupled to a memory. The memory is configured to store a program or instructions. When the program or the instructions are executed by the processor, the communication apparatus is enabled to implement the method in any possible implementations of the first aspect or the second aspect.

According to a sixth aspect, a chip is provided. The chip includes a processor. A memory configured to store a computer program is disposed independently of the chip, and the processor is configured to execute the computer program stored in the memory, to perform the method in any possible implementations of the first aspect or the second aspect.

According to a seventh aspect, a computer-readable storage medium is provided. The computer-readable storage medium stores a computer program or instructions. When the computer program or the instructions are executed, the method in any possible implementations of the first aspect or the second aspect is implemented.

According to an eighth aspect, a computer program product is provided. The computer program product includes computer program code. When the computer program code runs on a computer, the computer is enabled to perform the method in any possible implementations of the first aspect or the second aspect.

It may be understood that any communication apparatus, chip, computer-readable storage medium, computer program product, or the like provided above is configured to perform the corresponding method provided above. Therefore, for beneficial effect that can be achieved by the communication apparatus, the chip, the computer-readable storage medium, the computer program product, or the like, refer to beneficial effect in the corresponding method. Details are not described herein again.

## BRIEF DESCRIPTION OF DRAWINGS

FIG. 1 is a diagram of a communication system applicable to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of another communication method according to an embodiment of this application;
FIG. 5 is a schematic block diagram of a communication apparatus according to an embodiment of this application; and
FIG. 6 is a diagram of a structure of a communication apparatus according to an embodiment of this application.

## DESCRIPTION OF EMBODIMENTS

The following describes technical solutions of embodiments in this application with reference to accompanying drawings.

The technical solutions of embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, LTE time division duplex (time division duplex, TDD), a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio (new radio, NR) access technology. The technical solutions provided in this application may be further applied to a future communication system such as a 6th generation (6th generation, 6G) mobile communication system.

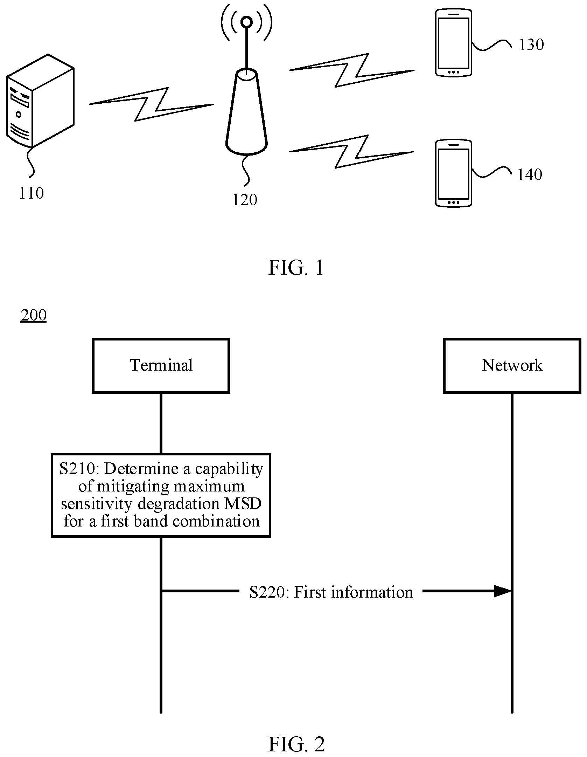

FIG. 1 is a diagram of a communication system 100 applicable to an embodiment of this application. As shown in FIG. 1, the communication system 100 may include a core network device 110, an access network device 120, and at least one terminal device (for example, a terminal device 130 and a terminal device 140 shown in FIG. 1). The terminal device 130 and the terminal device 140 may be connected to the access network device 120 in a wireless manner, and the access network device 120 is connected to the core network device 110 in a wireless or wired manner. It should be understood that the core network device and the access network device may be different physical devices that are independent of each other, functions of the core network device and logical functions of the access network device may be integrated into a same physical device, or some functions of the core network device and some functions of the access network device may be integrated into one physical device. It should be further understood that FIG. 1 is merely a diagram. The communication system may further include another network device, for example, may further include a wireless relay device and a wireless backhaul device. This is not limited in this application. It may be understood that the network in this embodiment of this application may be the core network device 110, or may be the access network device 120. The terminal in this embodiment of this application may be the terminal device 130 and/or the terminal device 140.

In this embodiment of this application, the access network device (for example, the access network device 120) is an access device for the terminal device to access the communication system in a wireless manner. The access network device may also be referred to as a radio access network (radio access network, RAN) device, a radio access network device, or a network device. For example, the access network device may be a base station. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be a communication module, a modem, or a chip disposed in the foregoing device or apparatus. The base station may alternatively be a network side device in a 6G network, a device that undertakes a base station function in a future communication system, or the like. The base station may support networks of a same access technology or different access technologies. The base station may be fixed or movable. For example, a helicopter or an uncrewed aerial vehicle may be configured as a movable base station, and one or more cells may move based on a position of the movable base station. In other examples, a helicopter or an uncrewed aerial vehicle may be configured as a device for communicating with another base station. A specific technology and a specific device form used by the access network device are not limited in embodiments of this application.

In some deployments, the gNB may include a CU and a DU. The gNB may further include an active antenna unit (active antenna unit, AAU). The CU implements some functions of the gNB. The DU implements some functions of the gNB. For example, the CU is responsible for processing a non-real-time protocol and service, to implement functions of a radio resource control (radio resource control, RRC) layer and a packet data convergence protocol (packet data convergence protocol, PDCP) layer. The DU is responsible for processing a physical layer protocol and a real-time service, to implement functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer eventually becomes information at the PHY layer, or is converted from the information at the PHY layer. Therefore, in this architecture, higher layer signaling such as RRC layer signaling may also be considered as being sent by the DU or sent by the DU and the AAU. It may be understood that, the network device may be a device including one or more of a CU node, a DU node, and an AAU node. In addition, the CU may be used as a network device in an access network, or may be used as a network device in a core network (core network, CN). This is not limited in this application.

In addition, the terminal device (for example, the terminal device 130 and the terminal device 140) in this embodiment of this application may be a device that provides voice/data connectivity for a user, for example, a handheld device or a vehicle-mounted device with a wireless connection function; may be a device in Internet of Vehicles communication, for example, a communication terminal uploaded by a vehicle or a road side unit (road side unit, RSU); may be a communication terminal carried on an uncrewed aerial vehicle; or may be a terminal device in an internet of things (internet of things, IoT) system. The terminal device may also be referred to as a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

For example, the terminal device includes but is not limited to: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal device in a 5G network or a terminal device in a next-generation communication system (for example, a 6G communication system), a terminal device in a future evolved public land mobile network (public land mobile network, PLMN), or the like. A specific form of the terminal device is not limited in embodiments of this application.

The access network device and the terminal device may be deployed on land, and include an indoor or outdoor device, a handheld device, or a vehicle-mounted device; may be deployed on water; or may be deployed on a plane, a balloon, and a satellite in air. Application scenarios of the access network device and the terminal device are not limited in embodiments of this application.

It should be understood that in a future communication system, for example, a 6G communication system, the foregoing device may still use a name of the device in the 5G communication system, or may have another name. This is not limited in embodiments of this application. Functions of the foregoing devices may be completed by one independent device, or may be completed by several devices together. During actual deployment, network elements in the core network may be deployed on a same physical device or different physical devices. This is not limited in embodiments of this application. FIG. 1 is merely an example, and does not constitute any limitation on the protection scope of this application. A communication method provided in embodiments of this application may further relate to a network element or a device that is not shown in FIG. 1. Certainly, the communication method provided in embodiments of this application may alternatively include only some devices shown in FIG. 1. This is not limited in embodiments of this application.

The communication system 100 used in this embodiment of this application is merely an example for description, and the communication system applicable to this embodiment of this application is not limited thereto. Any communication system that can implement functions of the foregoing devices is applicable to this embodiment of this application.

In this embodiment of this application, unless otherwise specified, the network device is an access network device. The terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems for implementing service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application is executable to perform communication according to the method provided in embodiments of this application. For example, the method provided in embodiments of this application may be performed by the terminal device or the network device, or a functional module (for example, a processor, a chip, or a chip system) that is in the terminal device or the network device and that can invoke and execute the program.

As described in the background, in an actual signal transmission process, interference is caused to signal reception of a UE due to various reasons. This may cause receiver sensitivity degradation of the UE, that is, MSD. As a result, receiving performance of the UE is affected. Based on different interference causes, there are four types of MSD: inter-modulation (inter-modulation, IMD) interference, harmonic/harmonic mixing (harmonic/harmonic mixing) interference, cross-band isolation (cross-band isolation), and proximity (Proximity) interference.

The inter-modulation interference means that second order, third order, fourth order, or fifth order inter-modulation products of two uplink bands in a dual-uplink band combination like LTE-NR dual connectivity (E-UTRA-NR dual connectivity, EN-DC) or uplink carrier aggregation (uplink carrier aggregation, UL CA) fall into a signal receiving band of a downlink band, and that the inter-modulation products of the two uplink bands fall into the signal receiving band of the downlink band may be understood that an $n^{th}$ order inter-modulation frequency may be obtained through calculation of frequencies of the two uplink bands. The $n^{th}$ order inter-modulation frequency is within a range of a downlink receive band of the UE. As a result, interference may be caused to signal reception of the UE, and receiver sensitivity of the UE is degraded. The downlink receive band may be one of downlink bands respectively corresponding to the two uplink bands on which inter-modulation is generated, or the downlink receive band may be a downlink receive band of a third band other than two concurrent uplink bands in a CA/DC combination including more than two bands.

The harmonic/harmonic mixing interference means that when a transmitter and a receiver of a band combination supported by the UE are in an active state at the same time, receiving performance of the UE may be reduced due to the harmonic and/or harmonic mixing interference. The harmonic interference means that an uplink second, third, fourth, or fifth harmonic of a lower band in the CA/DC band combination falls into a higher band. This causes interference to reception of the higher band. The harmonic mixing interference means that mixing of a second, third, fourth, or fifth harmonic in a local-frequency signal in a lower band and an uplink signal in a higher band in the CA/DC band combination falls into a wanted signal receiving band of the lower band. This causes interference to reception of the lower band.

The cross-band isolation means that when a band used by the UE to send uplink information is very close to a band used to receive downlink information, or when an uplink signal in a band in the band combination is interfered from an uplink to a downlink due to insufficient suppression on a frequency range of a received signal in another band by a filter, receiver sensitivity of the UE is degraded.

The proximity interference refers to interference of an uplink signal on a same band to a signal on a receive band.

In addition, based on an assumption and a definition of a band combination in a conventional RAN4, an obtained MSD value exceeds 10 dB (dB) in many band combinations, and even exceeds 20 dB in some band combinations. An excessively large MSD value is not suitable for an operator to deploy the CA/DC combination. A band combination DC_3-n78 widely used in 5G NR is used as an example. DC_3-n78 indicates that there is dual connectivity DC between a band 3 and a band n78. MSD values of DC_3-n78 in different channel bandwidths are shown in Table 1. Channel bandwidths of a downlink band n78 all exceed 10 dB. When downlink channel bandwidths of n78 are 10 MHz, 15 MHz, and 20 MHz, the MSD value even exceeds 20 dB. It may be understood that, when signal energy of the terminal is less than an MSD value specified in a protocol, the terminal cannot receive any data. Therefore, when the MSD value is excessively high, receiving performance of the terminal may be affected. Therefore, the MSD value needs to be reduced, in other words, the MSD needs to be mitigated.

Table 1

| Channel bandwidth of an LTE band (uplink band 3) or an NR band (downlink band n78)/a downlink band affected by MSD | | | | | | | | | | | | |
|---|---|---|---|---|---|---|---|---|---|---|---|---|
| Downlink channel bandwidth of n78 (unit: MHz) | 5 | 10 | 15 | 20 | 25 | 30 | 40 | 50 | 60 | 80 | 90 | 100 |
| MSD value (unit: dB) | | **23.9** | **22.1** | **20.9** | | | 17.9 | 16.8 | 16.0 | 14.8 | 14.3 | 13.8 |

Currently, there are various methods for mitigating the MSD, and the methods are mainly implemented by using hardware of the UE and through network scheduling. For inter-modulation interference MSD, the inter-modulation interference MSD may be mitigated by adjusting hardware of the UE or through network scheduling, for example, may be mitigated by improving printed circuit board (printed circuit board, PCB) isolation of the UE, improving antenna isolation of the UE, improving performance of a radio frequency device (for example, linearity of a power amplifier (power amplifier, PA)), UE transmit power reduction, or network scheduling on a single uplink carrier. For harmonic/harmonic mixing interference MSD, the harmonic/harmonic mixing interference MSD may also be mitigated by adjusting hardware of the UE or through network scheduling, for example, PA output harmonic suppression of the UE may be increased, a harmonic suppression filter may be used at a PA output end, and non-simultaneous transmission and reception through network scheduling restriction is implemented. The following describes in detail various methods for mitigating the MSD.

Method 1: Improve PCB isolation.

When high-frequency lines of a PCB are routed, crosstalk is introduced if signal lines are written in parallel at a short distance. The crosstalk refers to a coupling phenomenon between signal lines that are not directly connected. A parameter of a PCB layer, a spacing between signal lines, electrical characteristics of a drive end and a receive end, and a connection manner of the signal line all affect the crosstalk to some extent. A possible solution is to reduce high-frequency signal crosstalk through PCB routing, in other words, mitigate the inter-modulation interference MSD by using a PCB isolation method.

For example, a ground line or a ground plane is inserted between two lines with severe crosstalk to isolate the lines and reduce crosstalk. For another example, on a premise that routing space is sufficient, a spacing between adjacent signal lines may be increased, and lengths of parallel signal lines may be reduced. For still another example, if it cannot be avoided that lines are in parallel at a same layer, measures such as enabling lines at two adjacent layers to be perpendicular to each other are taken.

Method 2: Improve antenna isolation of the UE.

The antenna isolation refers to a ratio of a signal received by another antenna to a signal transmitted by an antenna. In other words, if an antenna receives fewer signals from another antenna, isolation between the two antennas is better and a degree of interference is lower. Effective measures to improve the antenna isolation include a blocking method, an orthogonal polarization method, a cancellation method, and an appropriate antenna layout.

The blocking method means that a barrier is set on an electromagnetic coupling channel to block electromagnetic coupling. For example, a parabolic antenna is provided with a skirt edge, and in comparison with a standard antenna, a front-to-rear ratio index of the parabolic antenna is improved by nearly 15 dB (dB). The orthogonal polarization method means that two antennas are mutually orthogonally polarized. For example, two antennas in a duplex state are in orthogonal linear polarization or orthogonal circular polarization to transmit and receive signals respectively, to improve an isolation effect. The cancellation method means that another coupling channel is manually created between two antennas, so that the coupling channel and an original coupling channel cancel each other, thereby enhancing an isolation effect. Most directly, increasing an antenna spacing can improve the antenna isolation, but in practice, there is often a limitation, especially when an antenna layout range on a mobile terminal is narrow. Therefore, an appropriate antenna layout is more important. When resolving an actual problem, the foregoing several methods are generally used in a comprehensive manner.

Method 3: UE transmit power reduction

An increase of a UE transmit power leads to an increase of an MSD value. For example, when a power level is increased from 3 to 2 (that is, from 23 dBm to 26 dBm), an MSD value of second order inter-modulation may be increased from 26 dB to 31.9 dB, and an MSD value of fourth order inter-modulation may be increased from 8 dB to 18.5 dB. A transmit power of a physical uplink shared channel (physical uplink shared channel, PUSCH) is determined by using Formula 1, and $P_{CMAX,f,c}(i)$ represents a maximum transmit power configured for the UE. When $P_{CMAX,f,c}(i)$ is small enough, the UE may use $P_{CMAX,f,c}(i)$ as an actual transmit power of the PUSCH.

$$P_{PUSCH,b,f,c}(i,j,q_d,l) = \min\left\{\begin{array}{l} P_{CMAX,f,c}(i), \\ P_{O\_PUSCH,b,f,c}(j) + 10\log_{10}\left(2^{\mu} \cdot M_{RB,b,f,c}^{PUSCH}(i)\right) + a_{b,f,c}(j) \cdot PL_{b,f,c}(q_d) + \Delta_{TF,b,f,c}(i) + f_{b,f,c}(i,l) \end{array}\right\}$$

(Formula 1)

$P_{PUSCH,b,f,c}(i, j, q_d, l)$ represents the transmit power of the PUSCH, $P_{O\_PUSCH,b,f,c}(j)$ represents an open-loop basic power control parameter, $M_{RB,b,f,c}^{PUSCH}(i)$ represents a bandwidth occupied by the PUSCH, $a_{b,f,c}(j)$ represents a path loss compensation factor, $PL_{b,f,c}(q_d)$ represents a path loss obtained through measurement based on a path loss reference signal group $qd$, $\Delta_{TF,b,f,c}(i)$ represents an adjustment value of a modulation and coding scheme (modulation and coding scheme, MCS) used for PUSCH transmission, and $f_{b,f,c}(i,l)$ represents a closed-loop power adjustment value.

The configured maximum transmit power $P_{CMAX,f,c}$ satisfies the following boundary limitations:

$$P_{CMAX\_L,f,c} \leq P_{CMAX,f,c} \leq P_{CMAX\_H,f,c} \qquad \text{(Formula 2)}$$

$$P_{CMAX\_L,f,c} = MIN\left\{P_{EMAX,c} - \Delta T_{C,c}, \left(P_{PowerClass} - \Delta P_{PowerClass}\right) - MAX\left(MAX\left(MPR_c + \Delta MPR_c, A - MPR_c\right) + \Delta T_{TB,c} + \Delta T_{C,c} + \Delta T_{RxSRS}, P - MPR_c\right)\right\}$$

(Formula 3)

$$P_{CMAX\_H,f,c} = MIN\left\{P_{EMAX,c}, P_{PowerClass} - \Delta P_{PowerClass}\right\} \qquad \text{(Formula 4)}$$

$P_{EMAX,c}$ represents a power parameter configured by a network, $P_{PowerClass}$ represents a maximum UE power/power level, $\Delta T_{TB,c}$ represents additional tolerance, and $MPR_c$ represents maximum power reduction.

With reference to Formula 2 to Formula 4, it can be learned that a range of the configured maximum transmit power is related to the maximum power reduction (maximum power reduction, MPR). A larger MPR value indicates a smaller configured maximum transmit power. Therefore, the UE may determine a relatively large MPR value by the UE, to reduce the transmit power of the UE and mitigate the MSD. In addition, the MPR value is related to a power level, waveform selection, a modulation scheme, and frequency domain resource allocation of uplink transmission. Therefore, the MPR can be increased by using a higher modulation order or adjusting RB allocation, to reduce the transmit power of the UE and mitigate the MSD.

Method 4: Perform network scheduling on a single uplink carrier for sending uplink transmission.

For a dual-uplink band combination like UL CA/EN-DC, if uplink transmission is simultaneously sent on two uplink carriers, inter-modulation interference may be caused. If the network device performs scheduling restriction to ensure that uplink transmission can be sent only on one uplink carrier at a same moment, and uplink transmission is not scheduled on the other carrier, inter-modulation interference can be effectively avoided, and the MSD can be mitigated.

Method 5: Perform network scheduling to allow non-simultaneous transmission and reception of uplink transmission and downlink transmission.

A main cause of harmonic/harmonic mixing interference is that the UE needs to receive downlink transmission while sending uplink transmission. As a result, receiver sensitivity of the UE is affected. Therefore, the network performs restriction to ensure that at a same moment, downlink transmission is not scheduled while uplink transmission is scheduled, and the UE does not need to receive downlink transmission while sending uplink transmission; or uplink transmission is not scheduled while downlink transmission is scheduled, and the UE does not need to send uplink transmission while receiving downlink transmission, thereby reducing impact on receiver sensitivity.

In conclusion, mitigation methods vary for different types of MSD. For example, based on the four manners: improving PCB isolation, improving antenna isolation, transmit power reduction, and single-carrier uplink transmission through network scheduling restriction, the inter-modulation interference MSD can be mitigated, but mitigation for the harmonic/harmonic mixing interference MSD is small. Based on the two manners of increasing PA output harmonic suppression and performing non-simultaneous transmission and reception through network scheduling restriction, the harmonic/harmonic mixing interference MSD can be mitigated, but mitigation for the inter-modulation interference MSD is small.

In addition, performance of UEs produced by different manufacturers is different. Some UEs can meet a requirement for mitigating the MSD. For example, larger PCB isolation is allowed through design restrictions. However, some UEs cannot mitigate the MSD. The network does not know which UE can mitigate the MSD and which UE cannot mitigate the MSD. Therefore, this may lead to two results. First, the operator avoids deploying a band combination with an excessively severe MSD problem, which may include n3+n78 and n3+n41. However, these bands are main bands of operators in China, such as China Mobile, China Unicom, and China Telecom, and restrictions of network deployment on these bands may greatly affect operators' revenues. Second, the operator still deploys a band/band combination with large MSD, and ignores the MSD, but this inevitably affects receiving performance of the UE.

Further, since the network does not know whether the accessed UE can mitigate the MSD, the network does not know whether the UE needs to be intervened through scheduling restriction to mitigate the MSD of the UE. For a UE whose MSD has been automatically mitigated, the network does not need to further mitigate the MSD. In this case, if the network takes a measure blindly, the scheduling restriction is increased. For a UE whose MSD cannot be automatically mitigated, the network needs to take a measure. However, the network does not know which MSD of the band/band combination needs to be mitigated, and therefore cannot take an appropriate measure.

Therefore, embodiments of this application provide a communication method and a communication apparatus. A terminal sends first information to a network, where the first information indicates a capability of mitigating MSD, so that the network can determine, based on the first information, whether to take a measure, thereby improving transmission performance of a terminal having an MSD problem.

FIG. 2 shows a communication method according to an embodiment of this application. As shown in FIG. 2, the method 200 relates to interaction between a network and a terminal. The network may be, for example, the access network device 120 and the core network device 110 shown in FIG. 1, and the terminal may be the terminal device 130 and the terminal device 140 shown in FIG. 1. The method 200 may specifically include S210 and S220.

S210: The terminal determines a capability of mitigating maximum sensitivity degradation MSD for a first band combination, where the first band combination includes a first band and a second band, and a band number of the first band is different from a band number of the second band.

It should be understood that, because performance of different terminals is different, some terminals can meet a requirement for mitigating the MSD. For example, a hardware design of the terminal allows larger PCB isolation. In this case, the terminal can mitigate inter-modulation interference MSD. To be specific, after determining the two bands in the first band combination, the terminal may determine, based on a hardware condition of the terminal, whether the MSD for the first band combination can be mitigated, in other words, the terminal determines the capability of mitigating the MSD for the first band combination.

For example, the first band combination is CA_n3-n78, the first band is n3, the second band is n78, and carrier aggregation is performed on the first band n3 and the second band n78. The CA_n3-n78 band combination may have both inter-modulation interference MSD and harmonic interference MSD. If the hardware design of the terminal allows larger PCB isolation, the inter-modulation interference MSD may be mitigated, and the terminal determines that the inter-modulation interference MSD of the CA_n3-n78 band combination can be mitigated.

S220: The terminal sends first information. Correspondingly, the network receives the first information.

It should be understood that the first information indicates the capability of mitigating the MSD for the first band combination. The first information may include at least one of the following: MSD mitigation capability information, MSD type information, band information, first range information, first behavior information, second behavior information, simultaneous transmission and reception capability information, or scaling factor information. Alternatively, the first information may include at least one of the following: MSD mitigation capability information, MSD type information, band information, second range information, first behavior information, second behavior information, simultaneous transmission and reception capability information, or scaling factor information. Alternatively, the first information may include at least one of the following: mitigation capability information, MSD type information, band information, a first MSD value, a third MSD value, first behavior information, second behavior information, simultaneous transmission and reception capability information, or scaling factor information.

In a possible implementation, the first information includes the MSD mitigation capability information. The MSD mitigation capability information indicates that the terminal can mitigate the MSD, or the MSD mitigation capability information indicates that the terminal cannot mitigate the MSD.

In an embodiment, the MSD mitigation capability information is determined based on the first MSD value, and the first MSD value is an MSD value of the terminal for the first band combination. The first MSD value may be understood as an MSD value actually generated by the terminal for a given band combination (for example, the first band combination). It should be understood that the first MSD value corresponds to the terminal, and first MSD values of different terminals may be different. The first MSD value further corresponds to the band combination, and MSD values of different band combinations are determined independently. For example, the terminal increases an original MSD value (in other words, increases a second MSD value) by increasing antenna isolation, PCB isolation, and the like. The original MSD value herein may be understood as an MSD value obtained through an assumption and a definition of a band combination in a conventional RAN4. At a specific power level, for a given band combination (for example, the first band combination), there is a fixed MSD type and a corresponding second MSD value.

Specifically, if the first MSD value is less than or equal to a first threshold, the MSD mitigation capability information indicates that the terminal can mitigate the MSD; or if the first MSD value is greater than a first threshold, the MSD mitigation capability information indicates that the terminal cannot mitigate the MSD. Alternatively, if the first MSD value is less than a first threshold, the MSD mitigation capability information indicates that the terminal can mitigate the MSD; or if the first MSD value is greater than or equal to a first threshold, the MSD mitigation capability information indicates that the terminal cannot mitigate the MSD.

It may be understood that, if the MSD value of the terminal for the first band combination is less than or equal to the first threshold, it indicates that the first MSD value of the terminal (that is, an MSD value reduced by the terminal) meets a specific requirement. In this case, the MSD mitigation capability information may be reported to indicate that the terminal can mitigate the MSD, and the network does not need to further mitigate the MSD. If the first MSD value of the terminal is greater than the first threshold, it indicates that the terminal cannot mitigate the MSD value, or a mitigated MSD value cannot meet a requirement. In this case, the MSD mitigation capability information may be reported to indicate that the terminal cannot mitigate the MSD, and network scheduling restriction is needed to intervene in the terminal, so as to mitigate the MSD of the terminal.

In another embodiment, the MSD mitigation capability information is determined based on the first MSD value and a second MSD value. The first MSD value is an MSD value of the terminal for the first band combination, and the first MSD value may be understood as an MSD value actually generated by the terminal for a given band combination (for example, the first band combination). The second MSD value is an MSD value predefined for the first band combination, and the first MSD value is less than the second MSD value. The second MSD value may be understood as an MSD value obtained through an assumption and a definition of a band combination in a conventional RAN4. For the given band combination (for example, the first band combination), the second MSD value is fixed, and is predefined in a protocol. Generally, the first MSD value is less than the second MSD value, in other words, the terminal reduces the MSD value. The first MSD value is a mitigated MSD value, and the second MSD value is an original MSD value.

Specifically, if the first MSD value is less than or equal to the first threshold and the second MSD value is greater than or equal to a second threshold, the MSD mitigation capability information indicates that the terminal can mitigate the MSD; or if the first MSD value is greater than the first threshold, the MSD mitigation capability information indicates that the terminal cannot mitigate the MSD. Alternatively, if the first MSD value is less than the first threshold and the second MSD value is greater than or equal to a second threshold, the MSD mitigation capability information indicates that the terminal can mitigate the MSD; or if the first MSD value is greater than or equal to the first threshold, the MSD mitigation capability information indicates that the terminal cannot mitigate the MSD.

It may be understood that the terminal may determine, based on the first MSD value and the second MSD value, whether the terminal is capable of mitigating the MSD. If the first MSD value is less than or equal to the first threshold and the second MSD value is greater than or equal to the second threshold, it indicates that the terminal can mitigate the MSD, the network does not need to further mitigate the MSD, and the terminal may send the MSD mitigation capability information to the network to indicate that the terminal can mitigate the MSD. If the first MSD value is greater than the first threshold, it indicates that the terminal cannot effectively mitigate the MSD. Therefore, the terminal may send the MSD mitigation capability information to the network to indicate that the terminal cannot mitigate the MSD.

It should be noted that the first threshold and/or the second threshold are/is predefined, the first threshold and/or the second threshold are/is configured by using a higher layer parameter, or the first threshold and/or the second threshold are/is dynamically indicated by using downlink control signaling (downlink control information, DCI) or a media access control control element (media access control control element, MAC CE). This is not limited in this application. For example, values of the first threshold and/or the second threshold may be 5 dB, 10 dB, or the like.

For example, the first information may include one bit. If the bit is set to 0, it indicates that the first information includes the MSD mitigation capability information indicating that the terminal device cannot mitigate the MSD. If the bit is set to 1, it indicates that the first information includes the MSD mitigation capability information indicating that the terminal device can mitigate the MSD.

It may be understood that the first information may include only the MSD mitigation capability information. For example, only when the first MSD value decreases to 5 dB or less, the MSD mitigation capability information reported by the terminal indicates that the terminal can mitigate the MSD. However, when the second MSD value is reduced from 20 dB to 10 dB, because the first MSD value (that is, the reduced MSD value is 10 dB) cannot meet a transmission requirement (the first MSD value is less than or equal to 5 dB), the MSD mitigation capability information reported by the terminal indicates that the terminal cannot mitigate the MSD, and network scheduling restriction is needed to intervene in the terminal to mitigate the MSD of the terminal.

In another possible implementation, the first information includes the MSD type information, the MSD type information indicates a type of the MSD for the first band combination, and the MSD type information includes at least one of the following: second order inter-modulation interference, third order inter-modulation interference, fourth order inter-modulation interference, fifth order inter-modulation interference, second order harmonic interference, third order harmonic interference, fourth order harmonic interference, fifth order harmonic interference, second order harmonic mixing interference, third order harmonic mixing interference, fourth order harmonic mixing interference, fifth order harmonic mixing interference, or cross-band isolation.

In an embodiment, the MSD type information includes all MSD types existing in the first band combination. In other words, all MSD types existing in the first band combination are reported to the network. It may be understood that, for a specific band combination, there may be at least two MSD types. For example, the second order inter-modulation interference, the fourth order inter-modulation interference, the fifth order inter-modulation interference, and the harmonic interference all exist in the CA_n3-n78 band combination.

In another embodiment, the MSD type information includes an MSD type corresponding to a maximum second MSD value in the first band combination, and the second MSD value is an MSD value predefined for the first band combination. In other words, an MSD type with the most severe MSD problem is reported to the network.

In another embodiment, the MSD type information includes an MSD type that satisfies a first condition and that is in the first band combination, the first condition is that the first MSD value is greater than or equal to a third threshold, and the first MSD value is an MSD value of the terminal for the first band combination. In other words, the terminal may send, to the network based on the first MSD value of the terminal, the MSD type corresponding to the first MSD value greater than or equal to the third threshold. In this case, it indicates that the terminal cannot mitigate the MSD either. Therefore, an MSD type that cannot be mitigated needs to be sent to the network, so that the network takes an appropriate measure based on the MSD type information in the first information.

It should be noted that the third threshold is predefined, the third threshold is configured by using a higher layer parameter, or the third threshold is dynamically indicated by using DCI or a MAC CE. This is not limited in this application. For example, a value of the third threshold may be 5 dB, 10 dB, or the like.

In another embodiment, the MSD type information includes an MSD type that is in the first band combination and indicates that a third MSD value is not zero. The third MSD value is a difference between the first MSD value and the second MSD value, the first MSD value is an MSD value of the terminal device for the first band combination, the second MSD value is an MSD value predefined for the first band combination, and the first MSD value is less than the second MSD value. In other words, the MSD type information reported by the terminal device is a type of mitigated MSD.

Optionally, the terminal reports an MSD type that satisfies a second condition. The second condition is that the first MSD value is less than or equal to a first threshold and the second MSD value is greater than a second threshold.

For example, if a first MSD type satisfies that the first MSD value is less than or equal to the first threshold and the second MSD value is greater than the second threshold, the MSD type information reported by the terminal includes the first MSD type, in other words, the first MSD type is a type of MSD that has been mitigated by the terminal. The type of MSD that has been mitigated by the terminal is reported, so that the network may learn, by receiving the first information, which type of MSD is mitigated by the terminal, and take a corresponding measure more pertinently to mitigate another type of MSD.

For another example, if a second MSD type satisfies that the first MSD value is greater than the first threshold and the second MSD value is greater than the second threshold, the MSD type information reported by the terminal does not include the second MSD type. In other words, although the terminal mitigates second MSD type, a mitigation degree for the second MSD type is not enough. After the network receives the first information, if the first information does not include the second MSD type, it indicates that the terminal does not mitigate the second MSD type, and the network needs to take a corresponding measure to mitigate the second MSD type.

For another example, if a third MSD type satisfies that the first MSD value is less than or equal to the first threshold and the second MSD value is less than or equal to the first threshold, the type of mitigated MSD reported by the terminal does not include the third MSD type either, in other words, an original MSD value of the third MSD type is not large (that is, the second MSD value is not large), and neither the terminal nor the network needs to mitigate the third MSD type.

Optionally, the first information may include eight bits, and each bit corresponds to one MSD type. In this case, the first information may correspond to a maximum of eight MSD types. For a bit set to 0, it indicates that an MSD type corresponding to the bit does not exist in the first band combination. For a bit set to 1, it indicates that an MSD type corresponding to the bit exists in the first band combination.

In another possible implementation, the first information includes the MSD mitigation capability information and the MSD type information. In other words, when reporting the MSD mitigation capability information, the terminal may report corresponding MSD type information, to be specific, which types of MSD can be mitigated by the terminal, or which types of MSD cannot be mitigated by the terminal. In this case, the network may learn, by receiving the first information, which types of MSD need to be mitigated and/or which types of MSD do not need to be mitigated.

In another possible implementation, the first band combination further includes a third band. A band number of the third band is different from the band number of the first band, and the band number of the third band is different from the band number of the second band. The first information includes the band information, the band information indicates the third band, and the third band is a band that is affected by the MSD and that is in the first band combination.

In this case, the terminal may directly report the band affected by the MSD to the network, so that after receiving the first information, the network may determine information about the third band affected by the MSD, to mitigate an MSD problem pertinently.

For example, if the band combination includes at least three bands, and MSD generated in the first band and MSD generated in the second band fall in a receive band of the third band, the terminal device may report the band information of the third band. For example, the terminal device may report the band number of the third band.

In another possible implementation, the first information includes the first range information. The first range information includes a range to which the first MSD value belongs, and the first MSD value is an MSD value of the terminal for the first band combination.

Optionally, the network side and the terminal side may predefine or the network pre-configures an MSD mitigation range mapping table (that is, a first MSD range mapping table). The mapping table may include a value (reported value) reported by the terminal and a first MSD value range corresponding to the reported value. The reported value may be a bit value, the first MSD value range may be [0, N1), [N1, N2), [N2, N3), or the like, and the bit value corresponds to the first MSD value range. For example, 0 bits reported by the terminal indicate that the first MSD value is within the range of [0, N1), and 1 bit reported by the terminal indicates that the first MSD value is within the range of [N1, N2). Therefore, after receiving the reported value, the network may determine the range of the first MSD value based on the MSD mitigation range mapping table.

For example, mitigation range division of the MSD may be shown in Table 2 or Table 3. A value of (N1, N2, N3, ..., N(m+1)) is predefined or pre-configured. Optionally, m=3, and a value of (N1, N2, N3, N4) is (5, 10, 15, 20); m=7, and a value of (N1, N2, N3, N4, N5, N6, N7) is (5, 10, 15, 20, 25, 30, 35); or m=0, and a value of N1 may be 5, 10, 15, or 20.

Table 2

| Reported value | Measured quantity value (dB) |
|---|---|
| Lower_MSD_0 | $0 \le L\_MSD < N1$ |
| Lower_MSD_1 | $N1 \le L\_MSD < N2$ |
| Lower_MSD_2 | $N2 \le L\_MSD < N3$ |
| ... | ... |
| Lower_MSD_m | $L\_MSD \ge N(m+1)$ |

Table 3

| Reported value | Measured quantity value (dB) |
|---|---|
| Lower_MSD_0 | $0 < L\_MSD \leq N1$ |
| Lower_MSD_1 | $N1 < L\_MSD \leq N2$ |
| Lower_MSD_2 | $N2 < L\_MSD \leq N3$ |
| ... | ... |
| Lower_MSD_m | $L\_MSD > N(m+1)$ |

Optionally, the first information may include the first range information and the MSD type information. In other words, when reporting the first range information, the terminal may further report the MSD type information, so that after receiving the first information, the network may learn of the range to which the first MSD value belongs and a type of the first MSD value, and the network takes a corresponding measure more pertinently based on the first information to mitigate the MSD.

In another possible implementation, the first information includes the second range information. The second range information includes a range to which the third MSD value belongs, the third MSD value is a difference between the first MSD value and the second MSD value, the first MSD value is an MSD value of the terminal for the first band combination, the second MSD value is an MSD value predefined for the first band combination, and the first MSD value is less than the second MSD value.

Optionally, the network side and the terminal side may predefine or the network pre-configures a range mapping table of mitigated MSD (that is, a third MSD range mapping table). The mapping table may include a value (reported value) reported by the terminal and a third MSD value range corresponding to the reported value. The reported value may be a bit value, the third MSD value range may be [0, N1), [N1, N2), [N2, N3), or the like, and the bit value corresponds to the third MSD value range. For example, 0 bits reported by the terminal indicate that the third MSD value is within the range of [0, N1), and 1 bit reported by the terminal indicates that the third MSD value is within the range of [N1, N2). Therefore, after receiving the reported bit value, the network may determine the range of the third MSD value based on the MSD mitigation range mapping table, so that after receiving the first information, the network may take an appropriate measure to mitigate the MSD.

For example, value range division of the mitigated MSD may be shown in Table 2, Table 3, or Table 4. A value of (N1, N2, N3, ..., N(m+1)) is predefined or pre-configured. Optionally, m=3, and a value of (N1, N2, N3, N4) is (5, 10, 15, 20); m=7, and a value of (N1, N2, N3, N4, N5, N6, N7) is (5, 10, 15, 20, 25, 30, 35); or m=0, and a value of N1 may be 5, 10, 15, or 20.

Table 4

| Reported value | Measured quantity value (dB) |
|---|---|
| Lower_MSD_0 | $L\_MSD \geq N(m+1)$ |
| Lower_MSD_1 | $N2 \leq L\_MSD < N3$ |
| Lower_MSD_2 | $N1 \leq L\_MSD < N2$ |
| ... | ... |
| Lower_MSD_m | $0 \leq L\_MSD < N1$ |

Optionally, the first information may include the second range information and the MSD type information. In other words, when reporting the second range information, the terminal may further report the MSD type information, so that after receiving the first information, the network may learn of the range to which the third MSD value belongs and a type of the third MSD value, and the network takes a corresponding measure more pertinently based on the first information to mitigate the MSD.

In another possible implementation, the first information includes the first MSD value, or the first information includes the third MSD value. The third MSD value is a difference between the first MSD value and the second MSD value, the first MSD value is an MSD value of the terminal for the first band combination, the second MSD value is an MSD value predefined for the first band combination, and the first MSD value is less than the second MSD value.

In another possible implementation, the first information includes the first behavior information and/or the second behavior information. The first behavior information indicates that the network schedules uplink transmission on a single carrier or a single band. The second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

Optionally, when the inter-modulation interference MSD exists in the first band combination, the second MSD value is large, and the terminal cannot mitigate the MSD, the terminal reports that the network device is expected to perform a first behavior. For UL CA/EN-DC, if there are uplink resources on two carriers at a same moment, the network schedules uplink transmission on only one carrier.

Optionally, when the harmonic/harmonic mixing interference MSD exists in the first band combination, the second MSD value is large, and the terminal cannot mitigate the MSD, the terminal reports that the network is expected to perform a second behavior. For an FDD carrier, uplink and downlink transmission are not scheduled simultaneously, that the terminal receives and sends information simultaneously is avoided, or there is specific isolation between receiving and sending information.

It should be noted that the fifth threshold is predefined, the fifth threshold is configured by using a higher layer parameter, or the fifth threshold is dynamically indicated by using DCI or a MAC CE. This is not limited in this application.

In another possible implementation, the first information includes the simultaneous transmission and reception capability indication information. The simultaneous transmission and reception capability indication information indicates that the first band combination supports simultaneous transmission and reception, or the simultaneous transmission and reception capability indication information indicates that the first band combination does not support simultaneous transmission and reception.

In an embodiment, if the first MSD value is greater than or equal to a first threshold, the simultaneous transmission and reception capability indication information indicates that the first band combination does not support simultaneous transmission and reception; or if the first MSD value is less than a first threshold, the simultaneous transmission and reception capability indication information indicates that the first band combination supports simultaneous transmission and reception.

It may be understood that, if the first MSD value is greater than or equal to the first threshold, it indicates that the terminal cannot effectively mitigate the MSD. Therefore, the simultaneous transmission and reception capability indication information needs to be sent to the network to indicate that the first band combination does not support simultaneous transmission and reception, to avoid that the network schedules signal receiving and sending simultaneously, and avoid further impact on the MSD.

In another embodiment, if a second MSD value is greater than or equal to a fourth threshold, the simultaneous transmission and reception capability indication information indicates that the first band combination does not support simultaneous transmission and reception; or if the second MSD value is less than a fourth threshold, the simultaneous transmission and reception capability indication information indicates that the first band combination supports simultaneous transmission and reception.

It may be understood that, if the second MSD value is greater than or equal to the fourth threshold, it indicates that an original MSD value is large, and if the first band combination still supports simultaneous transmission and reception, the MSD may be further affected. Therefore, the terminal may also need to report the simultaneous transmission and reception capability indication information to indicate that the first band combination does not support simultaneous transmission and reception.

In another embodiment, if the first MSD value is less than or equal to a first threshold, the simultaneous transmission and reception capability indication information indicates that the first band combination does not support simultaneous transmission and reception, and the first MSD value is an MSD value of the terminal for the first band combination.

It may be understood that, if the first MSD value is less than or equal to the first threshold, in other words, the terminal mitigates the MSD for the first band combination, and if simultaneous transmission and reception of a signal is still supported, the first MSD value of the terminal may be affected, for example, the first MSD value is increased. As a result, receiving performance of the terminal is affected. Therefore, in this case, the terminal needs to report the simultaneous transmission and reception capability indication information to indicate that the first band combination does not support simultaneous transmission and reception.

It should be understood that, if the terminal has reported, before sending the first information, capability information of supporting simultaneous transmission and reception, the terminal may send the simultaneous transmission and reception capability indication information to indicate that the first band combination does not support simultaneous transmission and reception. If the terminal does not report, before sending the first information, capability information of supporting simultaneous transmission and reception, the terminal reports capability information of non-simultaneous transmission and reception, the terminal does not report capability information related to simultaneous transmission and reception, or the terminal may send the simultaneous transmission and reception capability indication information to indicate that the first band combination does not support simultaneous transmission and reception.

It should be noted that the fourth threshold is predefined, the fourth threshold is configured by using a higher layer parameter, or the fourth threshold is dynamically indicated by using DCI or a MAC CE. This is not limited in this application. For example, a value of the fourth threshold may be 10 dB, 15 dB, 28.7 dB, or the like.

In another possible implementation, the first information includes the scaling factor information. The scaling factor information indicates a ratio of a transmit power change value of the terminal to the third MSD value. The third MSD value is a difference between the first MSD value and a second MSD value, the first MSD value is an MSD value of the terminal for the first band combination, the second MSD value is an MSD value predefined in the first band combination, and the first MSD value is less than the second MSD value.

In some embodiments, the first information reported by the terminal includes the ratio of the transmit power change value of the terminal to the third MSD value. The terminal calculates the scaling factor information based on a relationship between the transmit power change value and the third MSD value. For example, if a transmit power of the terminal is increased by 2 dB, and the MSD value is decreased by 4 dB, a scaling factor reported by the terminal is 0.5.

In some other embodiments, the first information reported by the terminal includes the transmit power change value and the third MSD value, in other words, the terminal separately reports the transmit power change value of the terminal and the third MSD value, and the network calculates the scaling factor information based on the first information. For example, if the transmit power change value reported by the terminal is 2 dB, and the third MSD value is 4 dB, a scaling factor obtained by the terminal network through calculation is 0.5.

In some other embodiments, the network and the terminal may predefine or the network pre-configures a scaling factor mapping table. The mapping table may include a value (reported value) reported by the terminal and a scaling factor range corresponding to the reported value. The reported value may be a bit value, the scaling factor range may be [0, 0.2), [0.2, 0.4), ..., and [0.8, 1), and the bit value corresponds to the scaling factor range. For example, 0 bits reported by the terminal indicate that the scaling factor is within the range of [0, 0.2), and 1 bit reported by the terminal indicates that the scaling factor is within the range of [0.2, 0.4). Therefore, after receiving the reported bit value, the network may determine the scaling factor range based on the scaling factor range mapping table.

In another possible implementation, the first information may include the MSD type information and the scaling factor information. Considering different band combinations and different MSD types, the ratio of the transmit power change value to the third MSD value may be different. Therefore, when reporting a given band combination (for example, the first band combination), the terminal may report scaling factor information corresponding to at least one MSD type. After receiving the first information, the network may learn of a scaling factor corresponding to a specific MSD type, so that the transmit power of the terminal may be adjusted pertinently.

It should be understood that the first information may be carried on a MAC CE and sent to the network, or may be carried on a PUSCH and sent to the network. This is not limited in this application.

In addition, after receiving the first information, the network learns that the terminal can mitigate the MSD, or learns of a type of mitigated MSD, or a mitigation value of the MSD. Then, the network may determine whether the MSD needs to be further mitigated.

Optionally, if the network determines that the MSD does not need to be further mitigated, the network performs no action after receiving the first information. If the network determines that the MSD needs to be further mitigated, the network may mitigate the MSD of the terminal through scheduling restriction.

In an embodiment, after receiving the first information, the network learns that the terminal cannot mitigate the MSD, and then the network takes a corresponding measure to mitigate the MSD.

Specifically, after receiving the first information, the network learns of an MSD type with an excessively large MSD value, and then the network may take a corresponding measure based on the MSD type to mitigate the MSD. For example, if the MSD type reported by the terminal is inter-modulation interference, the network may schedule to send uplink transmission on a single carrier or a single band, to mitigate the MSD of this type. If the MSD type reported by the terminal is harmonic/harmonic inter-modulation interference, the network may not simultaneously schedule uplink and downlink transmission, or there is a specific interval between scheduled uplink and downlink transmission, to mitigate the MSD of this type.

In another embodiment, after receiving the first information, the network device learns that a network behavior expected by the terminal is a first behavior or a second behavior. In this case, the network performs corresponding scheduling restriction based on the first behavior or the second behavior that the terminal expects to perform, in other words, the network schedules uplink transmission on a single carrier or a single band, the network does not schedule uplink and downlink transmission simultaneously in the first band combination, or there is a specific interval between uplink and downlink transmission scheduled by the network in the first band combination.

In this embodiment of this application, the terminal may send the first information to the network, where the first information may indicate the capability of the terminal to mitigate the MSD for the first band combination, so that the network can learn of the capability of the terminal to mitigate the MSD, and determine, based on the first information, whether the MSD needs to be further mitigated. The MSD is effectively mitigated by the terminal or the network, so that the receiving performance of the terminal can be improved.

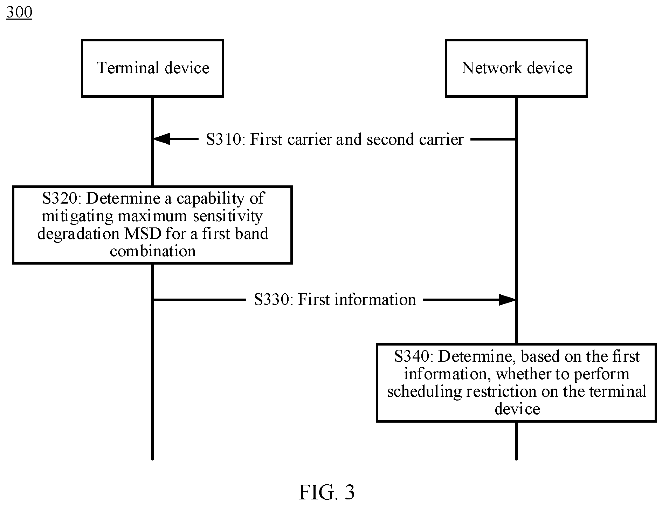

FIG. 3 shows another communication method according to an embodiment of this application. As shown in FIG.

3, the method 300 relates to interaction between a network device and a terminal device. The network device may be, for example, the access network device 120 and the core network device 110 shown in FIG. 1, and the terminal device may be the terminal device 130 and the terminal device 140 shown in FIG. 1. The method 300 may specifically include S310 to S340.

S310: The terminal device obtains a first carrier and a second carrier. Correspondingly, the network device sends the first carrier and the second carrier.

The network device may add the first carrier to initial configuration information for the terminal device. The terminal device may access the network device through the first carrier, and establish an RRC connection. A frequency of the first carrier belongs to a first band. The network device may query capability information of a UE by using signaling, and the UE reports the capability information of the UE. The capability information may include a list of band combinations supported by the UE and/or a list of candidate band combinations. The network device adds the second carrier as a secondary cell for the UE by using RRC reconfiguration information. A frequency of the second carrier belongs to a second band.

Carrier aggregation CA is performed on an uplink carrier of the first band and an uplink carrier of the second band, or the first carrier and the second carrier form dual connectivity. This dual connectivity mode may be EN-DC dual connectivity, NE-DC dual connectivity, NR-DC dual connectivity, or the like. This is not limited in this application.

It may be understood that the terminal device is configured to aggregate the first carrier and the second carrier, or the terminal device is configured to form dual connectivity of the first carrier and the second carrier, and the first carrier and the second carrier form a first band combination. For example, a band combination DC_3-n78 indicates that there is dual connectivity between a band 3 and a band n78.

S320: The terminal determines a capability of mitigating maximum sensitivity degradation MSD for the first band combination, where the first band combination includes a first band and a second band, and a band number of the first band is different from a band number of the second band.

S330: The terminal device sends first information. Correspondingly, the network device receives the first information.

For S320 and S330, refer to S210 and S220 respectively. For brevity, details are not described herein again.

S340: The network device determines, based on the first information, whether to perform scheduling restriction on the terminal device.

Specifically, after receiving the first information, the network device determines, based on the first information, whether the MSD needs to be further mitigated. If the network device determines that the terminal device has mitigated the MSD, the network device may not perform any operation after receiving the first information. If the network device determines that the MSD needs to be further mitigated, the network device may perform scheduling restriction on the terminal device to mitigate the MSD of the terminal device.

Optionally, after receiving the first information, if the network device learns of an MSD type with an excessively large MSD value, the network device takes a measure based on a specific situation of the first information. For example, if the MSD type reported by the terminal device is inter-modulation interference, the network device may schedule uplink transmission on a single carrier or a single band, to mitigate the MSD of this type. If the MSD type reported by the terminal device is harmonic/harmonic inter-modulation interference, the network device may not simultaneously schedule uplink and downlink transmission, or there is a specific interval between scheduled uplink and downlink transmission, to mitigate the MSD of this type.

Optionally, after receiving the first information, if the network device learns that a network behavior expected by the terminal device is a first behavior or a second behavior, the network device may perform corresponding scheduling restriction based on the first behavior or the second behavior that the terminal device expects to perform. In other words, the network device determines, based on the first information, that the terminal device schedules uplink transmission on a single carrier or a single band, the network device determines, based on the first information, that the terminal device does not simultaneously schedule uplink and downlink transmission in the first band combination, or the network device determines, based on the first information, that an interval between uplink transmission and downlink transmission scheduled in the first band combination is greater than or equal to a fifth threshold.

Optionally, after receiving the first information, if the network device may learn of a ratio of a transmit power change value of the terminal device to a third MSD value, the network device may adjust, based on the first information, a transmit power for the terminal device to send an uplink signal, to reduce impact on the MSD.

In this embodiment of this application, the terminal device and the network device may exchange information through the first information. The first information may indicate a capability of the terminal device to mitigate the MSD for the first band combination, so that the network device determines, based on the first information, whether the MSD needs to be further mitigated, to avoid impact of the MSD on downlink communication, thereby improving receiving performance of the terminal.

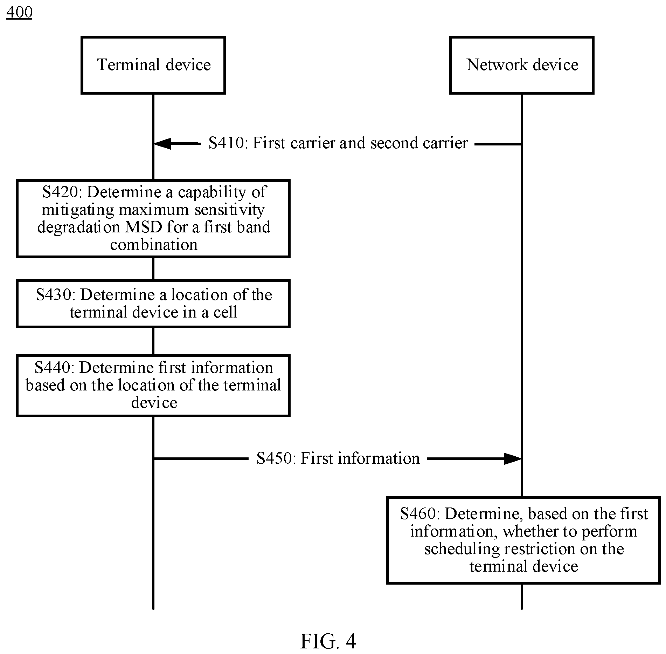

FIG. 4 shows another communication method according to an embodiment of this application. As shown in FIG. 4, the method 400 relates to interaction between a network device and a terminal device. The network device may be, for example, the access network device 120 and the core network device 110 shown in FIG. 1, and the terminal device may be the terminal device 130 and the terminal device 140 shown in FIG. 1. The method 400 may specifically include S410 to S460.

S410: The terminal device obtains a first carrier and a second carrier. Correspondingly, the network device sends the first carrier and the second carrier.

For specific content of this step, refer to S310. Details are not described herein again.

S420: The terminal device determines a capability of mitigating maximum sensitivity degradation MSD for a first band combination, where the first band combination includes a first band and a second band, and a band number of the first band is different from a band number of the second band.

For specific content of this step, refer to S210. Details are not described herein again.

S430: The terminal device determines a location of the terminal device in a cell.

Optionally, the terminal device determines the location in the cell based on a path loss measurement value or a timing advance (timing advance, TA). If the path loss measurement value or the timing advance of the terminal device is less than or equal to a sixth threshold, the terminal device is located at a position close to the cell to which the terminal device belongs. If the path loss measurement value or the timing advance of the terminal device is greater than a sixth threshold, the terminal device is located at a position far away from the cell to which the terminal device belongs.

Optionally, the terminal device may further determine the location in the cell based on a radio resource management (radio resource management, RRM) measurement parameter configured by the network.

S440: The terminal device determines first information based on the location of the terminal device.

Optionally, if the terminal device is located at the position close to the cell to which the terminal device belongs, the first information includes MSD mitigation capability information. The MSD mitigation capability information indicates that the terminal device can mitigate the MSD for the first band combination, or the MSD mitigation capability information indicates that the terminal device cannot mitigate the MSD for the first band combination.

In an embodiment, if a first MSD value is less than or equal to a first threshold, the MSD mitigation capability information indicates that the terminal device can mitigate the MSD for the first band combination; or if a first MSD value is greater than a first threshold, the MSD mitigation capability information indicates that the terminal device cannot mitigate the MSD for the first band combination. The first MSD value is an MSD value of the terminal for the first band combination.

In another embodiment, if a first MSD value is less than or equal to a first threshold, and a second MSD value is greater than or equal to a second threshold, the MSD mitigation capability information indicates that the terminal device can mitigate the MSD for the first band combination; or if a first MSD value is greater than a first threshold, the mitigation capability information indicates that the terminal device cannot mitigate the MSD for the first band combination. The first MSD value is an MSD value of the terminal for the first band combination, the second MSD value is an MSD value predefined for the first band combination, and the first MSD value is less than the second MSD value.

Optionally, if the terminal device is located at the position far away from the cell to which the terminal device belongs, the first information includes first behavior information and/or second behavior information. The first behavior information indicates that the network schedules uplink transmission on a single carrier or a single band. The second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

S450: The terminal device sends the first information. Correspondingly, the network device receives the first information.

For specific content of this step, refer to S220. Details are not described herein again.

S460: The network device determines, based on the first information, whether to perform scheduling restriction on the terminal device.

For specific content of this step, refer to S340. Details are not described herein again.

In this embodiment of this application, when determining the first information, the terminal device considers impact of the location of the terminal device on the MSD, so that the terminal device can more efficiently determine and report the first information, and the network device determines, based on the first information, whether to take a corresponding measure to further mitigate the MSD, thereby avoiding affecting receiving performance of the terminal device as much as possible.

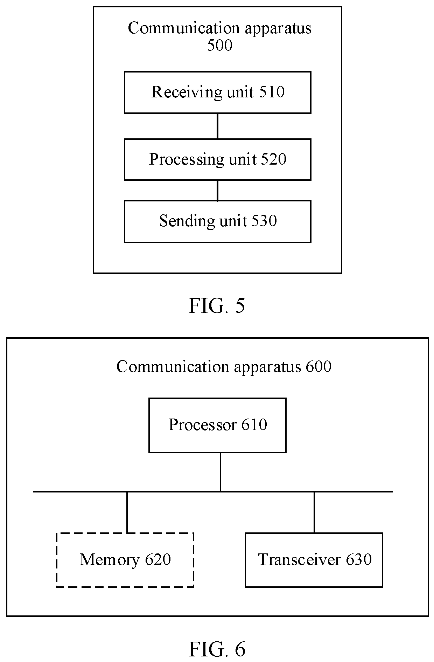

The foregoing describes the method embodiments of embodiments of this application in detail with reference to FIG. 1 to FIG. 4. The following describes apparatus embodiments of embodiments of this application in detail with reference to FIG. 5 and FIG. 6. It should be understood that descriptions of the method embodiments correspond to descriptions of the apparatus embodiments. Therefore, for a part that is not described in detail, refer to the foregoing method embodiments.

FIG. 5 is a schematic block diagram of a communication apparatus according to an embodiment of this application.

In some embodiments, the communication apparatus 500 includes a processing unit 520 and a sending unit 530.

Optionally, the communication apparatus 500 may be configured to implement steps or procedures performed by the terminal device in the method embodiments shown in FIG. 2 to FIG. 4. For example, the communication apparatus 500 may be a terminal device, or may be a chip or a circuit in the terminal device.

The processing unit 520 is configured to determine a capability of mitigating maximum sensitivity degradation MSD for a first band combination, where the first band combination includes a first band and a second band, and a band number of the first band is different from a band number of the second band. The sending unit 530 is configured to send first information, where the first information indicates the capability of mitigating the MSD.

Optionally, the communication apparatus 500 further includes a receiving unit 510. The receiving unit 510 is configured to obtain a first carrier and a second carrier. The first band corresponding to the first carrier and the second band corresponding to the second carrier form the first band combination. A relationship of the first band combination is carrier aggregation, or a relationship of the first band combination is dual connectivity. This dual connectivity mode may include EN-DC, NE-DC, or NR-DC.

Optionally, the processing unit 520 is further configured to determine a location in a cell based on a path loss measurement value or a timing advance. If the path loss measurement value or the timing advance of the terminal device is less than or equal to a sixth threshold, the terminal device is located at a position close to the cell to which the terminal device belongs; or if the path loss measurement value or the timing advance of the terminal device is greater than a sixth threshold, the terminal device is located at a position far away from the cell to which the terminal device belongs.

If the terminal device is located at the position close to the cell to which the terminal device belongs, the first information includes MSD mitigation capability information. The MSD mitigation capability information indicates that the terminal device can mitigate the MSD for the first band combination, or the MSD mitigation capability information indicates that the terminal device cannot mitigate the MSD for the first band combination.

If a first MSD value is less than or equal to a first threshold, the MSD mitigation capability information indicates that the terminal device can mitigate the MSD for the first band combination; or if a first MSD value is greater than a first threshold, the MSD mitigation capability information indicates that the terminal device cannot mitigate the MSD for the first band combination. The first MSD value is an MSD value of the terminal for the first band combination.

If a first MSD value is less than or equal to a first threshold, and a second MSD value is greater than or equal to a second threshold, the MSD mitigation capability information indicates that the terminal device can mitigate the MSD for the first band combination; or if a first MSD value is greater than a first threshold, the mitigation capability information indicates that the terminal device cannot mitigate the MSD for the first band combination. The first MSD value is an MSD value of the terminal for the first band combination, the second MSD value is an MSD value predefined for the first band combination, and the first MSD value is less than the second MSD value.

If the terminal device is located at the position far away from the cell to which the terminal device belongs, the first information includes first behavior information and/or second behavior information. The first behavior information indicates that the network sends uplink transmission on a single carrier or a single band. The second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

In some embodiments, the communication apparatus 500 includes the receiving unit 510. Optionally, the communication apparatus 500 may be configured to implement steps or procedures performed by the network device in the method embodiments shown in FIG. 2 to FIG. 4. For example, the communication apparatus 500 may be a network device, or may be a chip or a circuit in the network device.

The receiving unit 510 is configured to receive first information. The first information indicates a capability of a terminal to mitigate maximum sensitivity degradation MSD for a first band combination. The first band combination includes a first band and a second band, and a band number of the first band is different from a band number of the second band.

Optionally, the communication apparatus further includes the sending unit 530. The sending unit 530 is configured to send a first carrier and a second carrier. The first band corresponding to the first carrier and the second band corresponding to the second carrier form the first band combination. A relationship of the first band combination is carrier aggregation, or a relationship of the first band combination is dual connectivity. This dual connectivity mode may include EN-DC, NE-DC, or NR-DC.

Optionally, the communication apparatus further includes the processing unit 520. The processing unit 520 is configured to determine, based on the first information, to schedule uplink transmission on a single carrier or a single band.

Optionally, the processing unit 520 is further configured to determine, based on the first information, not to simultaneously schedule uplink and downlink transmission in the first band combination.

Optionally, the processing unit 520 is further configured to determine, based on the first information, that an interval between uplink and downlink transmission scheduled in the first band combination is greater than or equal to a fifth threshold.

Optionally, the processing unit 520 is further configured to adjust, based on the first information, a transmit power for the terminal device to send an uplink signal.

FIG. 6 is a diagram of a structure of a communication apparatus according to an embodiment of this application.

As shown in FIG. 6, the communication apparatus 600 includes a processor 610. The processor 610 is coupled to a memory 620. The memory 620 is configured to store a computer program or instructions and/or data. The processor 610 is configured to execute the computer program or the instructions stored in the memory 620, or read data stored in the memory 620, to perform the method in the foregoing method embodiments.

Optionally, there are one or more processors 610.

Optionally, there are one or more memories 620.

Optionally, the memory 620 and the processor 610 are integrated together, or are disposed separately.

Optionally, as shown in FIG. 6, the communication apparatus further includes a transceiver 630. The transceiver 630 is configured to receive and/or send a signal. For example, the processor 610 is configured to control the transceiver 630 to receive and/or send a signal.

Optionally, the communication apparatus 600 may be configured to perform operations performed by the terminal device in the foregoing method embodiments. For example, the processor 610 is configured to execute the computer program or the instructions stored in the memory 620, to implement related operations performed by the terminal device in the foregoing method embodiments. For example, the transceiver 630 may be configured to perform the receiving operation of the terminal device in S310 shown in FIG. 3, and may be further configured to perform the sending operation of the terminal device in S330. The processor 610 is configured to perform a processing step of a terminal device in this embodiment of this application. For example, the processor 610 is configured to perform an operation of determining first information based on a location of the terminal device. It should be understood that the communication apparatus 600 shown in FIG. 6 may perform the operations performed by the terminal in FIG. 2 to FIG. 4.

Optionally, the communication apparatus 600 may be configured to perform operations performed by the network device in the foregoing method embodiments. For example, the processor 610 is configured to execute the computer program or the instructions stored in the memory 620, to implement related operations performed by the network device in the foregoing method embodiments. For example, the transceiver 630 may be configured to perform the sending operation of the network device in S310 shown in FIG. 3, and may be further configured to perform the receiving operation of the network device in S450 shown in FIG. 4. The processor 610 is configured to perform a processing step of a network device in this embodiment of this application. For example, the processor 610 is configured to determine, based on the first information, not to simultaneously schedule uplink and downlink transmission in a first band combination, or is configured to adjust, based on the first information, a transmit power for the terminal device to send an uplink signal. It should be understood that the communication apparatus 600 shown in FIG. 6 may perform the operations performed by the network device in FIG. 2 to FIG. 4.

It should be further understood that FIG. 6 is merely an example rather than a limitation, and the communication apparatus including the processor, the memory, and the transceiver may not depend on the structure shown in FIG. 6.

**In** addition, this application further provides a chip, and the chip includes a processor. A memory configured to store a computer program is disposed independently of the chip, and the processor is configured to execute the computer program stored in the memory, so that an operation and/or processing performed by the terminal device, the first device, or the positioning management device in any method embodiment are/is performed.

Further, the chip may include a communication interface. The communication interface may be an input/output interface, an interface circuit, or the like. Further, the chip may include a memory.

The chip in this embodiment of this application may be a field programmable gate array (field programmable gate array, FPGA), an application specific integrated circuit (application specific integrated circuit, ASIC), a system on chip (system on chip, SoC), a CPU, a network processor (network processor, NP), a digital signal processing circuit (digital signal processor, DSP), a micro controller unit (micro controller unit, MCU), a programmable controller (programmable logic device, PLD), another programmable logic device, a discrete gate or a transistor logic device, a discrete hardware component, or another integrated chip.

This application further provides a computer program product. The computer program product includes computer program code. When the computer program code runs on a computer, the computer is enabled to perform the method in any one of the embodiments shown in FIG. 2 to FIG. 4.

This application further provides a computer-readable medium. The computer-readable medium stores program code. When the program code runs on a computer, the computer is enabled to perform the method in any one of the embodiments shown in FIG. 2 to FIG. 4.

During implementation, the steps of the foregoing method may be completed by using an integrated logic circuit of hardware in a processor or instructions in a form of software. The steps of the methods disclosed with reference to embodiments of this application may be directly performed and completed by a hardware processor, or may be performed and completed by a combination of hardware and software modules in the processor. The software module may be located in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof. To avoid repetition, details are not described herein again.

It should be noted that the processor in this embodiment of this application may be an integrated circuit chip, and has a signal processing capability. During implementation, the steps of the foregoing method embodiments may be completed by using an integrated logic circuit of hardware in a processor or instructions in a form of software. A general-purpose processor may be a microprocessor, or the processor may be any conventional processor or the like. The steps of the methods disclosed with reference to embodiments of this application may be directly performed and completed by a hardware decoding processor, or may be performed and completed by a combination of hardware and software modules in the decoding processor. The software module may be located in a storage medium that is mature in the art, such as a random access memory, a flash memory, a read-only memory, a programmable read-only memory, an electrically erasable programmable memory, or a register. The storage medium is located in the memory. The processor reads information in the memory and completes the steps of the methods in combination with hardware thereof.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) that is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a sync link dynamic random access memory (sync link DRAM, SLDRAM), and a direct rambus dynamic random access memory (direct rambus RAM, DR RAM). It should be noted that the memories of the system and method described herein are intended to include, but are not limited to, these and any other suitable types of memories.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a specific working process of the foregoing apparatus and unit, refer to a corresponding process in the method embodiments. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief description, for a specific working process of the foregoing system, apparatus, and unit, refer to a corresponding process in the method embodiments. Details are not described herein again.

In the several embodiments provided in this application, it should be understood that the disclosed apparatus and method may be implemented in other manners. For example, the apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to a conventional technology, or some of the technical solutions may be implemented in the form of a software product. The computer software product is stored in a storage medium, and includes a plurality of instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Terms used in the foregoing embodiments are merely intended to describe specific embodiments, and are not intended to limit this application. Terms "one", "a", and "this" of singular forms used in this specification and the appended claims of this application are intended to include a form like "one or more", unless otherwise specified in the context clearly. It should be further understood that in the following embodiments of this application, "at least one" and "one or more" mean one, two, or more. "First", "second", and various numbers are merely used for differentiation for ease of description, and are not used to limit the scope of embodiments of this application. The term "and/or" is used for describing a correspondence between corresponding objects, and represents that three relationships may exist. For example, "A and/or B" may represent the following three cases: Only A exists, only B exists, and both A and B exist, where A and B may be singular or plural. The character "/" generally indicates an "or" relationship between the associated objects. Sequence numbers of the following processes do not mean a sequence of execution. The sequence of execution of the processes should be determined according to functions and internal logic of the processes, and should not constitute any limitation on an implementation process of embodiments of this application. In addition, in embodiments of this application, numbers such as "301", "401", and "501" are merely used as identifiers for ease of description, and do not limit a sequence of performing steps.

Reference to "an embodiment", "some embodiments", or the like described in this specification means that one or more embodiments of this application include a specific feature, structure, or characteristic described with reference to embodiments. In this application, the term "example", "for example", or the like is used to represent an example, an illustration, or a description. Any embodiment or design scheme described as an "example" or "for example" in this application should not be explained as being more preferred or having more advantages than another embodiment or design scheme. In particular, the terms such as "example" and "for example" used herein are intended to present the related concept in a specific implementation. The terms "include", "have", and their variants all mean "include but are not limited to", unless otherwise specifically emphasized in another manner. In embodiments of this application, descriptions such as "when...", "in a case of...", and "if" all mean that the device performs corresponding processing in an objective case, and are not limited to time, and the device is not required to perform a determining action during implementation. This does not mean that there is another limitation. In this application, "indicate" may include "directly indicate" and "indirectly indicate". When a piece of indication information indicates A, the indication information may directly indicate A or indirectly indicate A, but it does not indicate that the indication information definitely carries A.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, applied to a terminal or a module in the terminal, and comprising:

    determining a capability of mitigating maximum sensitivity degradation MSD for a first band combination, wherein the first band combination comprises a first band and a second band, and a band number of the first band is different from a band number of the second band; and
    sending first information, wherein the first information indicates the capability of mitigating the MSD for the first band combination.

2. A communication method, applied to a network or a module in the network, and comprising:
   receiving first information, wherein the first information indicates a capability of a terminal to mitigate maximum sensitivity degradation MSD for a first band combination, the first band combination comprises a first band and a second band, and a band number of the first band is different from a band number of the second band.

3. The method according to claim 1 or 2, wherein
   the first information comprises MSD mitigation capability information, wherein the MSD mitigation capability information indicates that the terminal can mitigate the MSD, or the MSD mitigation capability information indicates that the terminal cannot mitigate the MSD.

4. The method according to claim 3, wherein

if a first MSD value is less than or equal to a first threshold, the MSD mitigation capability information indicates that the terminal can mitigate the MSD; or
if a first MSD value is greater than a first threshold, the MSD mitigation capability information indicates that the terminal cannot mitigate the MSD, and
the first MSD value is an MSD value of the terminal for the first band combination.

5. The method according to claim 3, wherein

if a first MSD value is less than or equal to a first threshold, and a second MSD value is greater than or equal to a second threshold, the MSD mitigation capability information indicates that the terminal can mitigate the MSD; or
if a first MSD value is greater than a first threshold, the MSD mitigation capability information indicates that the terminal cannot mitigate the MSD, and
the first MSD value is an MSD value of the terminal for the first band combination, the second MSD value is an MSD value predefined for the first band combination, and the first MSD value is less than the second MSD value.

6. The method according to any one of claims 1 to 5, wherein
the first information comprises MSD type information, the MSD type information indicates a type of the MSD, and the MSD type information comprises at least one of the following: second order inter-modulation interference, third order inter-modulation interference, fourth order inter-modulation interference, fifth order inter-modulation interference, second order harmonic interference, third order harmonic interference, fourth order harmonic interference, fifth order harmonic interference, second order harmonic mixing interference, third order harmonic mixing interference, fourth order harmonic mixing interference, fifth order harmonic mixing interference, or cross-band isolation.

7. The method according to claim 6, wherein the MSD type information comprises a type of the MSD that satisfies a first condition and that is in the first band combination, the first condition is that the first MSD value is greater than or equal to a third threshold, and the first MSD value is the MSD value of the terminal for the first band combination.

8. The method according to any one of claims 1 to 7, wherein the first band combination further comprises a third band, a band number of the third band is different from the band number of the first band, and the band number of the third band is different from the band number of the second band; and
the first information comprises band information, the band information indicates the third band, and the third band is a band that is affected by the MSD and that is in the first band combination.

9. The method according to any one of claims 1 to 8, wherein
the first information comprises first range information, the first range information comprises a range to which the first MSD value belongs, and the first MSD value is the MSD value of the terminal for the first band combination.

10. The method according to any one of claims 1 to 8, wherein
the first information comprises second range information, the second range information comprises a range to which a third MSD value belongs, the third MSD value is a difference between the first MSD value and the second MSD value, the first MSD value is the MSD value of the terminal for the first band combination, the second MSD value is an MSD value predefined for the first band combination, and the first MSD value is less than the second MSD value.

11. The method according to any one of claims 1 to 8, wherein
the first information comprises the first MSD value, or the first information comprises the third MSD value, and the third MSD value is a difference between the first MSD value and the second MSD value, the first MSD value is the MSD value of the terminal for the first band combination, the second MSD value is an MSD value predefined for the first band combination, and the first MSD value is less than the second MSD value.

12. The method according to any one of claims 1 to 11, wherein

the first information comprises first behavior information and/or second behavior information, and the first behavior information indicates that the network schedules uplink transmission on a single carrier or a single band; and
the second behavior information indicates that the network does not simultaneously schedule uplink and downlink transmission in the first band combination, or the second behavior information indicates that an interval between uplink and downlink transmission scheduled by the network in the first band combination is greater than or equal to a fifth threshold.

13. The method according to any one of claims 1 to 12, wherein
the first information comprises simultaneous transmission and reception capability indication information, and the simultaneous transmission and reception capability indication information indicates that the first band combination supports simultaneous transmission and reception, or the simultaneous transmission and reception capability indication information indicates that the first band combination does not support simultaneous transmission and reception.

14. The method according to claim 13, wherein

if the first MSD value is greater than or equal to the first threshold, the simultaneous transmission and reception capability indication information indicates that the first band combination does not support simultaneous transmission and reception;
if the first MSD value is less than the first threshold, the simultaneous transmission and reception capability indication information indicates that the first band combination supports simultaneous transmission and reception;
if the second MSD value is greater than or equal to a fourth threshold, the simultaneous transmission and reception capability indication information indicates that the first band combination does not support simultaneous transmission and reception; or
if the second MSD value is less than a fourth threshold, the simultaneous transmission and reception capability indication information indicates that the first band combination supports simultaneous transmission and reception, and
the first MSD value is the MSD value of the terminal for the first band combination, the second MSD value is the MSD value predefined for the first band combination, and the first MSD value is less than the second MSD value.

15. The method according to claim 13, wherein
if the first MSD value is less than or equal to the first threshold, the simultaneous transmission and reception capability indication information indicates that the first band combination does not support simultaneous transmission and reception, and the first MSD value is the MSD value of the terminal for the first band combination.

16. The method according to any one of claims 1 to 15, wherein
the first information comprises scaling factor information, and the scaling factor information indicates a ratio of a transmit power change value of the terminal to the third MSD value, the third MSD value is the difference between the first MSD value and the second MSD value, the first MSD value is the MSD value of the terminal for the first band combination, the second MSD value is the MSD value predefined in the first band combination, and the first MSD value is less than the second MSD value.

17. A communication apparatus, comprising a module configured to perform the method according to any one of claims 1 to 16.

18. A communication apparatus, comprising a processor, wherein the processor is coupled to a memory, the memory is configured to store a program or instructions, and when the program or the instructions are executed by the processor, the communication apparatus is enabled to perform the method according to any one of claims 1 to 16.

19. A chip, comprising a processor, wherein the processor is configured to read and execute a computer program stored in a memory, to perform the method according to any one of claims 1 to 16.

20. A computer-readable storage medium, wherein the computer-readable storage medium stores instructions, and when the instructions are run on a computer, the computer is enabled to perform the method according to any one of claims 1 to 16.

FIG. 1

200

S210: Determine a capability of mitigating maximum sensitivity degradation MSD for a first band combination

S220: First information

FIG. 2

300

```
┌─────────────────┐                                    ┌─────────────────┐
│ Terminal device │                                    │ Network device  │
└─────────────────┘                                    └─────────────────┘
         │                                                      │
         │◄──── S310: First carrier and second carrier ─────────│
         │                                                      │
┌─────────────────────────────┐                                │
│ S320: Determine a capability │                                │
│ of mitigating maximum        │                                │
│ sensitivity degradation MSD  │                                │
│ for a first band combination │                                │
└─────────────────────────────┘                                │
         │                                                      │
         │──────────── S330: First information ────────────────►│
         │                                                      │
         │                           ┌──────────────────────────────────┐
         │                           │ S340: Determine, based on the    │
         │                           │ first information, whether to     │
         │                           │ perform scheduling restriction on │
         │                           │ the terminal device              │
         │                           └──────────────────────────────────┘
         │                                                      │
```

FIG. 3

400

```
┌──────────────────┐                           ┌──────────────────┐
│ Terminal device  │                           │  Network device  │
└──────────────────┘                           └──────────────────┘
```

◄——— S410: First carrier and second carrier ———

┌──────────────────────────────┐
│ S420: Determine a capability of │
│ mitigating maximum sensitivity │
│ degradation MSD for a first band │
│ combination                    │
└──────────────────────────────┘

┌──────────────────────────────┐
│ S430: Determine a location of the │
│ terminal device in a cell      │
└──────────────────────────────┘

┌──────────────────────────────┐
│ S440: Determine first information │
│ based on the location of the terminal │
│ device                         │
└──────────────────────────────┘

———————— S450: First information ————————►

┌──────────────────────────────┐
│ S460: Determine, based on the first │
│ information, whether to perform │
│ scheduling restriction on the  │
│ terminal device                │
└──────────────────────────────┘

FIG. 4

Communication apparatus
500

Receiving unit 510

Processing unit 520

Sending unit 530

FIG. 5

Communication apparatus 600

Processor 610

Memory 620

Transceiver 630

FIG. 6

## INTERNATIONAL SEARCH REPORT

| International application No. |
|---|
| **PCT/CN2023/097375** |

### A. CLASSIFICATION OF SUBJECT MATTER

H04W8/24(2009.01)i

According to International Patent Classification (IPC) or to both national classification and IPC

### B. FIELDS SEARCHED

Minimum documentation searched (classification system followed by classification symbols)

IPC:H04W,H04Q

Documentation searched other than minimum documentation to the extent that such documents are included in the fields searched

Electronic data base consulted during the international search (name of data base and, where practicable, search terms used)

CNTXT, ENTXT, ENTXTC, DWPI, WPABS, 3GPP: 终端, 上报, 能力, 最大灵敏度下降, 改进, 改善, ue, report, capability, ability, msd, improve

### C. DOCUMENTS CONSIDERED TO BE RELEVANT

| Category* | Citation of document, with indication, where appropriate, of the relevant passages | Relevant to claim No. |
|---|---|---|
| X | CN 113678550 A (NOKIA TECHNOLOGIES OY) 19 November 2021 (2021-11-19) description, paragraphs [0085]-[0101] | 1-20 |
| X | CN 112020140 A (RESEARCH INSTITUTE OF CHINA MOBILE COMMUNICATIONS CORPORATION et al.) 01 December 2020 (2020-12-01) description, paragraphs [0113]-[0261] | 1-20 |
| X | US 2020236696 A1 (NTT DOCOMO, INC.) 23 July 2020 (2020-07-23) description, paragraphs [0043]-[0071] | 1-20 |
| A | CN 112770316 A (RESEARCH INSTITUTE OF CHINA MOBILE COMMUNICATIONS CORPORATION et al.) 07 May 2021 (2021-05-07) entire document | 1-20 |
| A | NOKIA et al. "R1-1716614, Single UL Transmission in LTE-NR Dual Connectivity" *3GPP TSG-RAN WG1 NR AH #3*, 21 September 2017 (2017-09-21), entire document | 1-20 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 July 2023** | **31 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/097375**

| Patent document cited in search report | | | Publication date (day/month/year) | Patent family member(s) | | | Publication date (day/month/year) |
|---|---|---|---|---|---|---|---|
| CN | 113678550 | A | 19 November 2021 | US | 2022225080 | A1 | 14 July 2022 |
| | | | | WO | 2020201617 | A1 | 08 October 2020 |
| | | | | AU | 2020250940 | A1 | 30 September 2021 |
| | | | | EP | 3949609 | A1 | 09 February 2022 |
| CN | 112020140 | A | 01 December 2020 | None | | | |
| US | 2020236696 | A1 | 23 July 2020 | WO | 2019069750 | A1 | 11 April 2019 |
| | | | | JP | 2021016010 | A | 12 February 2021 |
| CN | 112770316 | A | 07 May 2021 | WO | 2021088759 | A1 | 14 May 2021 |

Form PCT/ISA/210 (patent family annex) (July 2022)

**REFERENCES CITED IN THE DESCRIPTION**

**Patent documents cited in the description**

- CN 202210926439